# EUROPÄISCHE PATENTANMELDUNG

(11) **EP 2 540 753 A1**
(43) Veröffentlichungstag der Anmeldung: **02.01.2013**
(21) Anmeldenummer: 11171954.8
(22) Anmeldetag: 29.06.2011
(51) Int. Cl.: C08G 18/08, C08G 18/10, C08G 18/38, C08G 18/80, C07C 381/14, C14C 3/08, C14C 3/18, C14C 3/20, C14C 3/28

(54) **Zusammensetzung auf Basis Carbamoylsulfonatgruppen-haltiger Verbindungen**

(71) Anmelder: LANXESS Deutschland GmbH, 51369 Leverkusen (DE)
(72) Erfinder: Die Erfindernennung liegt noch nicht vor

(57) **Zusammenfassung**

Zusammensetzung gefunden, enthaltend
a) wenigstens eine Carbamoylsulfonatgruppen-haltige Verbindung und
b) wenigstens eine Carbonsäure,

die weniger als 0,001 Gew.-%, bezogen auf die Zusammensetzung an Emulgator enthält.

## Beschreibung

Die Erfindung betrifft eine Zusammensetzung auf Basis Carbamoylsulfonatgruppen-haltiger Verbindungen, ein Verfahren zu ihrer Herstellung sowie ihre Verwendung als Reaktionskomponente für Aminogruppen enthaltende Verbindungen, beispielsweise als Lederhilfsmittel, dort insbesondere als Vorgerbstoff, Gerbstoff, Nachgerbstoff

Polyisocyanate mit einer Funktionalität größer als 2 sind als Vernetzer für polymere Materialien geeignet und werden beispielsweise seit langem mit Erfolg bei der Beschichtung von zum Beispiel metallischen Oberflächen verwendet. Polyisocyanate können entsprechend dem Einsatzgebiet in unmodifizierter Form für rein organische Beschichtungsmittel eingesetzt werden. Aufgrund der großen Nachfrage nach lösemittelfreien Systemen sind Beschichtungsmittel entwickelt worden, die lösemittelfreie oder lösemittelarme Systeme darstellen. Für die Vernetzung der in solchen Beschichtungsmitteln enthaltenen polymeren Bindemittel sind Polyisocyanate erwünscht, die in Wasser dispergiert werden können. Die Vernetzer müssen aber direkt vor der Anwendung in Wasser dispergiert werden, da die NCO-Gruppen in Wasser nicht stabil sind und somit eine begrenzte Topfzeit aufweisen. Es ist auch bekannt, wasserdispergierbare Polyisocyanate als Hilfsmittel bei der Herstellung von Leder (Gerbung, Nachgerbung, Zurichtung und Beschichtung), von Papier (Mittel zur Erhöhung der Nassfestigkeit und Trockenfestigkeit, Papierbeschichtung) sowie von Textil (Hochveredlung wie Knitterschutz bei Baumwolle, Schrumpffestausrüstung von Wolle) einzusetzen. Außerdem können Polyisocyanate zur Vernetzung von aminogruppenhaltigen Polymeren eingesetzt werden, beispielsweise von Copolymerisaten auf Basis von Monomeren wie Isobuten, Butadien, Acrylnitril, Isopren, Styrol und Acrylmonomeren, wobei die Aminogruppen durch nachfolgende Umsetzung eines Copolymerisats oder auf dem Wege der Copolymerisation eingeführt werden können. Als aminogruppenhaltige Polymere kommen auch Polykondensate oder Polyadditionsprodukte in Betracht.

Für bestimmte Anwendungen ist es vorteilhaft oder sogar essentiell, Vernetzer einzusetzen, die in Wasser klare Lösungen ergeben und in dieser Form, also vor dem Zusatz der aminogruppenhaltigen Reaktionskomponente, ausreichend stabil sind. Es ist ebenfalls besonders vorteilhaft, wenn solche Vernetzer bei niedrigen Temperaturen mit den Amino-Funktionen des Bindemittels schnell und vollständig reagieren. Weiterhin ist es seit langem bekannt, aminogruppenhaltige Polymere mit Polyisocyanaten zu vernetzen. Diese Verfahrensweise wird beispielsweise bei lösemittelhaltigen 2-Komponenten-Umkehrbeschichtungssystemen auf Basis von Isocyanat-Endgruppen enthaltenden Polyesterurethanen bzw. Prepolymeren und Polyaminen für flexible Substrate wie Textil und Leder angewendet. Aufgrund der hohen Reaktivität der Aminogruppen werden hierbei die Komponenten direkt in der Auftragseinheit vermischt. Eine vorherige Mischung der miteinander reagierenden Komponenten zu einem 1-Komponenten-Reaktivsystem wäre zum Beispiel dadurch möglich, dass man Polyisocyanate in blockierter Form einsetzt. Bei der Anwendung sind dazu in der Regel höhere Reaktionstemperaturen erforderlich, wobei das Blockierungsmittel aus der Beschichtung freigesetzt wird. Es gibt auch Formulierungen, bei denen das Blockierungsmittel Teil der fertigen Beschichtung wird und in das Netzwerk eingebaut wird.

Es gibt andererseits auch Anwendungen, bei denen eine vorherige Formulierung von isocyanathaltigen Vernetzern und aminogruppenhaltigen Polymeren in einem lösemittelfreien wässrigen System erforderlich ist und trotzdem eine schnelle Reaktion von blockierten Polyisocyanaten bei niedrigen Temperaturen, insbesondere Raumtemperatur, gegebenenfalls auch in Anwesenheit von Wasser, erforderlich ist. Dies ist zum Beispiel bei Verwendung von natürlichen Aminogruppen-haltigen Polymeren wie Kollagen, Gelatine oder Chitosan der Fall. In solchen Anwendungen werden beispielsweise aliphatische Aldehyde wie Formaldehyd oder Glutaraldehyd als Vernetzer eingesetzt.

Insbesondere bei Anwendungen mit biologischem Material (in vitro und in vivo) gilt es weitere Anforderungen an die Reinheit der Begleitstoffe oder an die Verarbeitbarkeit zu erfüllen, wobei die bekannten Produkte noch Nachteile aufweisen.

Es sind bereits aus DE-A 10 2006 056 479 Bisulfit-blockierte Polyisocyanate bekannt, die in Gegenwart von Lösemitteln hergestellt werden können. Ebenfalls sich aus US4413997 blockiert Isocyanate bekannt. Auch der Einsatz von internen oder externen Emulgatoren als Hilfsmittel zur Synthese wässriger Bisulfit-blockierter Polyisocyanate ist aus EP-A 0 690 135, EP-A 0 814 168 und EP-A-1647563 bekannt.

Es bestand daher die Aufgabe, wasserlösliche Polyisocyanat-basierte Vernetzer für wässrige Systeme bereitzustellen, die die oben genannten Kriterien hinsichtlich Stabilität bei der Formulierung, Reaktivität gegenüber Aminogruppen-haltigen Polymeren bei Raumtemperatur und in wässrigem Medium und gleichzeitig die hohe Anforderungen für den Einsatz als Reaktionskomponenten für die Reaktion mit biologischen Materialien erfüllen.

Überraschend wurde nun eine Zusammensetzung gefunden, enthaltend
a) wenigstens eine Carbamoylsulfonatgruppen-haltige Verbindung und
b) wenigstens eine Carbonsäure,
die weniger als 0,001 Gew.-%, bezogen auf die Zusammensetzung an Emulgator enthält.

### Komponente a)

Unter Carbamoylsulfonatgruppen-haltigen Verbindungen werden solche mit folgender Struktureinheit verstanden:

-NH-CO-SO₃⁻K⁺

worin K⁺ ein Kationenäquivalent ist.

Als Carbamoylsulfonatgruppen-haltige Verbindungen der Komponente a) kommen vorzugsweise Umsetzungsprodukte aus wenigstens einem organischen Polyisocyanat und wenigstens einem Bisulfit und/oder Disulfit in Frage.

Dabei kommen als organische Polyisocyanate insbesondere aliphatische, cycloaliphatische, araliphatische, aromatische oder heterocyclische Polyisocyanate in Betracht, wie sie z.B. von W. Siefken in Liebigs Annalen der Chemie 562, Seiten 75 bis 136 beschrieben werden.

Bevorzugt sind organische Polyisocyanate mit einer NCO-Funktionalität von 1,8 bis 4,2 mit einer Molmasse von vorzugsweise unter 800 g/mol, insbesondere organische Polyisocyanate mit einer NCO-Funktionalität von 1,8 bis 2,5 und einer Molmasse unter 400 g/mol.

Bevorzugte Polyisocyanate sind Verbindungen der Formel Q(NCO)ₙ mit einem mittleren Molekulargewicht unter 800, worin n eine Zahl von wenigstens 1,8, vorzugsweise von 1,8 bis 4,2, Q einen aliphatischen C₄-C₁₂-Kohlenwasserstoffrest, einen cycloaliphatischen C₆-C₁₅-Kohlenwasserstoffrest oder einen heterocyclischen C₂-C₁₂-Rest mit 1 bis 3 Heteroatomen aus der Reihe Sauerstoff, Schwefel, Stickstoff bedeuten, beispielsweise (i) Diisocyanate wie Ethylendiisocyanat, 1,4-Tetramethylendiisocyanat, 1,6-Hexamethylendiisocyanat, 1,12-Dodecandiisocyanat, 2-Isocyanatomethyl-1,8-octamethylendiisocyanat, 1,3-diisocyanato-cyclobutan, 1-Isocyanato-2-isocyanatomethyl-cyclopentan, 1,3- und 1,4-diisocyanato-cyclohexan sowie beliebige Gemische dieser Isomeren, 1,2-, 1,3- und 1,4- Bis(isocyanatomethyl)-cyclohexan sowie beliebige Gemische dieser Isomeren, 1,2-, 1,3- und 1,4- Bis(isocyanatoethyl)-cyclohexan sowie beliebige Gemische dieser Isomeren, 1,2-, 1,3- und 1,4- Bis(isocyanato-n-propyl)-cyclohexan sowie beliebige Gemische dieser Isomeren, 1-Isocyanatopropyl-4-isocyanatomethyl-cyclohexan und Isomere, 1-Isocyanato-3,3,5-trimethyl-5-isocyanatomethyl-cyclohexan, 2,4- und 2,6-Hexahydrotoluylen-diisocyanat sowie beliebige Gemische dieser Isomeren, 2,4'- und 4,4'-Diisocyanato-dicyclohexyl-methan und Isomere, 1,3- und 1,4-Phenylen-diisocyanat, 2,4- und 2,6-Toluylendiisocyanat sowie beliebige Gemische dieser Isomeren, Diphenylmethan-2,4'- und/oder -4,4'-diisocyanat, Naphthalin-1,5-diisocyanat, Uretdiongruppen enthaltende Polyisocyanate wie z.B. das Bis(6-isocyanatohexyl)-uretdion oder das die Uretdion-Struktur enthaltende Dimere des 1-Isocyanato-3,3,5-trimethyl-5-isocyanato-methylcyclohexans und beliebige Mischungen der vorgenannten Polyisocyanate; (ii) tri- und höherfunktionelle Polyisocyanate wie die Isomeren der Triisocyanatotriphenylmethanreihe (wie Triphenylmethan-4,4',4"-trisocyanat) und ihre Gemische; (iii) durch Allophanatisierung, Trimerisierung oder Biuretisierung aus den Polyisocyanaten (i) und/oder (ii) hergestellte Verbindungen, die mindestens 2,7 Isocyanatgruppen pro Molekül aufweisen. Beispiele für durch Trimerisierung hergestellte Polyisocyanate sind das durch Isocyanurat-Bildung erhältliche Trimerisat des 1-Isocyanato-3,3,5-trimethyl-5-isocyanatomethylcyclohexans und die durch Trimerisierung von Hexamethylendiisocyanat, gegebenenfalls im Gemisch mit 2,4'-Diisocyanatotoluol, erhältlichen Isocyanuratgruppen enthaltenden Polyisocyanate. Beispiele für durch Biuretisierung hergestellte Polyisocyanate sind Tris-(isocyanatohexyl)biuret und dessen Gemische mit seinen höheren Homologen, wie sie z.B. gemäß DE-OS 23 08 015 zugänglich sind. Besonders bevorzugt sind Diisocyanate.

Besonders bevorzugte Polyisocyanate sind solche mit einem Molekulargewicht von weniger als 400 g/mol mit an Aliphaten oder Cycloaliphaten gebundenen NCO-Gruppen, wie z.B. 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan (TMHI), 1,3- und 1,4-Diisocyanatohexan, 1,3- und 1,4-diisocyanato-cyclohexan (CHDI) sowie beliebige Gemische dieser Isomeren, 1-Isocyanato-2-isocyanatomethyl-cyclopentan, 1,2-, 1,3- und 1,4- Bis(isocyanatomethyl)-cyclohexan sowie beliebige Gemische von Isomeren, 1,2-, 1,3- und 1,4- Bis(isocyanatoethyl)-cyclohexan sowie beliebige Gemische dieser Isomeren, 1,2-, 1,3- und 1,4- Bis(isocyanato-n-propyl)-cyclohexan sowie beliebige Gemische dieser Isomeren, 1-Isocyanatopropyl-4-isocyanatomethyl-cyclohexan und Isomere,1-Isocyanato-3,3,5-trimethyl-5-isocyanatomethyl-cyclohexan (IPDI), 1-Isocyanato-1-methyl-4-isocyanatomethyl-cyclohexan (IMCI), 2,4'- und 4,4'-Diisocyanatodicyclohexyl-methan (H₁₂MDI) und Isomere, Dimeryl-diisocyanat (DDI), Bis(isocyanatomethyl)-bicyclo[2.2.1]heptan (NBDI), Bis(isocyanatomethyl)-tricyclo[5.2.1.0^{2,6}]decan (TCDDI) und Isomere und beliebige Gemische solcher Diisocyanate. Auch araliphatische Polyisocyanate wie die Xylylendiisocyanate der Formeln 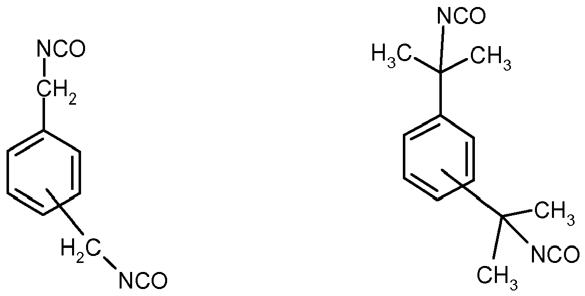 können verwendet werden.

Bevorzugt verwendet werden obige Diisocyanate. Man kann aber auch monofunktionelle aliphatische Isocyanate wie beispielsweise Butylisocyanat, Hexylisocyanat, Cyclohexylisocyanat, Stearylisocyanat oder Dodecylisocyanat und/oder Polyisocyanate mit einer durchschnittlichen NCO-Funktionalität von 2,2 bis 4,2 mitverwenden.

Bevorzugt handelt es sich bei den höherfunktionellen Polyisocyanaten um im wesentlichen aus trimerem 1,6-Diisocyanatohexan, trimerem 1,2-, 1,3- oder 1,4-Bis(isocyanatomethyl) cyclohexan, trimerem 1,2-, 1,3- oder 1,4- Bis(isocyanatoethyl)-cyclohexan, trimerem 1,2-, 1,3- oder 1,4-Bis(isocyanato-n-propyl)-cyclohexan, trimerem 1-Isocyanatopropyl-4-isocyanatomethyl-cyclohexan und Isomeren, oder trimerem 1-Isocyanato-3,3,5-trimethyl-5-isocyanatomethyl-cyclohexan und gegebenenfalls dimerem 1,6-Diisocyanatohexan, dimerem 1,2-, 1,3- oder 1,4-Bis(isocyanatomethyl) cyclohexan, dimerem 1,2-, 1,3- oder 1,4- Bis(isocyanatoethyl)-cyclohexan, dimerem 1,2-, 1,3- oder 1,4- Bis(isocyanato-n-propyl)-cyclohexan, dimerem 1-Isocyanatopropyl-4-isocyanatomethylcyclohexan und Isomere, oder dimerem 1-Isocyanato-3,3,5-trimethyl-5-isocyanatomethyl-cyclohexan und den entsprechend höheren Homologen bestehenden Isocyanuratgruppen und gegebenenfalls Uretdiongruppen aufweisenden Polyisocyanatgemischen mit einem NCO-Gehalt von 19 bis 24 Gew.-%, wie sie durch an sich bekannte katalytische Trimerisierung und unter Isocyanurat-Bildung von 1,6-Diisocyanatohexan, 1,2-, 1,3- oder 1,4-Bis(isocyanatomethyl) cyclohexan, 1,2-, 1,3- oder 1,4-Bis(isocyanatoethyl)-cyclohexan, 1,2-, 1,3- oder 1,4- Bis(isocyanato-n-propyl)-cyclohexan, 1-Isocyanatopropyl-4-isocyanatomethyl-cyclo-hexan und Isomeren, oder von 1-Isocyanato-3,3,5-trimethyl-5-isocyanatomethylcyclohexan erhalten werden und die vorzugsweise eine (mittlere) NCO-Funktionalität von 3,2 bis 4,2 aufweisen.

Weitere geeignete Polyisocyanate sind durch Modifizierung aliphatischer oder cycloaliphatischer Diisocyanate hergestellte Polyisocyanate mit Uretdion- und/oder Isocyanurat-, Urethan- und/oder Allophanat-, Biuret- oder Oxadiazinstruktur, wie sie beispielsweise in den DE-A 1 670 666, DE-A 3 700 209 und DE-A 3 900 053 und in den EP-A 336 205 und EP-A 339 396 beispielhaft beschrieben sind. Geeignete Polyisocyanate sind z.B. auch die estergruppenhaltigen Polyisocyanate, wie z.B. die durch Umsetzung von Pentaerythrit- oder Trimethylolpropan-silylethern mit Isocyanatocapronsäurechlorid zugänglichen Tetrakis- bzw. Triisocyanate (vgl. DE-A 3 743 782). Außerdem ist es auch möglich, Triisocyanate wie z.B. Tris-isocyanatodicyclohexylmethan zu verwenden.

Die Verwendung von monofunktionellen und von mehr als difunktionellen Isocyanaten wird in beiden Fällen vorzugsweise auf Mengen von je maximal 10 Mol-%, bezogen auf sämtliche Polyisocyanate, beschränkt.

Ganz besonders bevorzugt sind jedoch die oben genannten aliphatischen, cycloaliphatischen und araliphatischen Diisocyanate. Besonders bevorzugt sind Hexamethylendiisocyanat (HDI), Diisocyanato-cyclohexan, 1,2-, 1,3- und 1,4- Bis(isocyanatomethyl)-cyclohexan sowie beliebige Gemische von Isomeren, 1,2-, 1,3- und 1,4- Bis(isocyanatoethyl)-cyclohexan sowie beliebige Gemische dieser Isomeren, 1,2-, 1,3- und 1,4- Bis(isocyanato-n-propyl)-cyclohexan sowie beliebige Gemische dieser Isomeren, 2,4'- und 4,4'-Diisocyanato-dicyclohexylmethan, 1-Isocyanatopropyl-4-isocyanatomethyl-cyclohexan und Isomere und 1-Isocyanato-3,3,5-trimethyl-5-Isocyanatomethylcyclohexan (IPDI). Aus dieser zuletzt genannten Gruppe sind speziell bevorzugt Hexamethylendiisocyanat (HDI), 1,2-, 1,3- und 1,4- Bis(isocyanatomethyl)-cyclohexan sowie Gemische dieser Isomeren.

Als Bisulfite und/oder Disulfite kommen vorzugsweise deren Alkali- oder Ammoniumsalze, insbesondere die Natriumsalze der schwefeligen bzw. dischwefeligen Säure, d.h. Natriumhydrogensulfit (NaHSO₃) bzw. Natriumdisulfit (Na₂S₂O₅) in Frage.

Vorteilhaft verwendet werden können auch die anderen Alkali- und Ammoniumsalze dieser Säuren, nämlich Kaliumbisulfit, Kaliumdisulfit, Lithiumbisulfit, Lithiumdisulfit, Ammoniumbisulfit, Ammoniumdisulfit sowie einfache Tetraalkylammoniumsalze dieser Säuren wie beispielsweise Tetramethylammonium-bisulfit, Tetraethylammonium-bisulfit usw. Zur Blockierung werden die Salze bevorzugt als wässrige Lösungen mit Festkörpergehalten von 5 bis 40 Gew.-% eingesetzt.

In einer bevorzugten Ausführungsform der Erfindung beruhen die Carbamoylgruppen-haltigen Verbindungen auf aliphatischen Polyisocyanaten wie Hexamethylendiisocyanat, Isophorondiisocyanat, Bis(isocyanato)cyclohexan, 1,2-, 1,3- und 1,4- Bis(isocyanatomethyl)-cyclohexan sowie beliebige Gemische von Isomeren, 1,2-, 1,3- und 1,4- Bis(isocyanatoethyl)-cyclohexan sowie beliebige Gemische dieser Isomeren, 1,2-, 1,3- und 1,4- Bis(isocyanato-n-propyl)-cyclohexan sowie beliebige Gemische dieser Isomeren, 1-Isocyanatopropyl-4-isocyanatomethylcyclohexan und Isomere, 2,4' und 4,4'-Diisocyanato-dicyclohexylmethan oder Nonyltriisocyanat sowie Mischungen hieraus, insbesondere aber Hexamethylendiisocyanat 1,2-, 1,3- und 1,4-Bis(isocyanatomethyl)-cyclohexan sowie beliebige Gemische von Isomeren, 1,2-, 1,3- und 1,4-Bis(isocyanatoethyl)-cyclohexan sowie beliebige Gemische dieser Isomeren, 1,2-, 1,3- und 1,4-Bis(isocyanato-n-propyl)-cyclohexan sowie beliebige Gemische dieser Isomeren und/oder Isophorondiisocyanat, besonders bevorzugt Hexamethylendiisocyanat, Isophorondiisocyanat, 1,3-Bis(isocyanatomethyl)cyclohexan und 2,4'- und 4,4'-Diisocyanato-dicyclohexylmethan. Aus dieser zuletzt genannten Gruppe beruhen die Carbamoylgruppen-haltigen Verbindungen speziell bevorzugt auf Hexamethylendiisocyanat (HDI), 1,2-, 1,3- und 1,4- Bis(isocyanatomethyl)-cyclohexan sowie Gemische dieser Isomeren.

Die Komponente a) weist im Falle von Diisocyanaten als Rohstoffen vorzugsweise folgende Struktureinheiten auf:

K⁺ SO₃⁻ - [CO-NH-Q-NH]ₙ-CO-SO₃⁻K⁺

worin
- K⁺: ein Kationenäquivalent ist,
- Q: für einen beliebigen zweiwertigen Kohlenwasserstoffrest steht, der durch ein oder mehrere gleiche oder verschiedene Heteroatome unterbrochen sein kann oder substituiert sein kann,
und
- n: für eine Zahl von 1 bis 50, vorzugsweise 1 bis 30, steht.

Besonders bevorzugt steht K⁺ für einen Ammoniumrest NR₄⁺ (R = H, C₁-C₄-Alkyl), oder ein Alkalimetallkation wie Natrium, Kalium oder Lithium.

Ganz besonders bevorzugte Reste Q sind beispielsweise Tetramethylen, Pentamethylen, Hexamethylen, Trimethylhexamethylen, Octamethylen, Decamethylen oder Dodecamethylen, die durch ein oder mehrere gleiche oder verschiedene Heteroatome sein können oder 1,2-, 1,3-, oder 1,4-Cyclohexylen, sowie 1,2-, 1,3-, und 1,4-Cyclohexylen-dimethylen oder 3,3,5-Trimethyl-1,5-cyclohexylen-5-methylen.

Besonders bevorzugt hat n die Bedeutung von 1 bis 5, ganz besonders bevorzugt hat n den Wert 1.

Die oben genannten Carbamoylsulfonatgruppen können auch als Endgruppen in Polyurethan- oder Polyurethan-Harnstoff Dispersionen enthalten sein.

Die Komponente a) kann im Falle von Diisocyanaten als Rohstoffen auch folgende Struktureinheiten aufweisen:

X - [CO-NH-Q-NH]ₙ-CO-SO₃⁻K⁺

in der
X eine Gruppe der Formel -NH-CO-SO₃⁻K⁺ oder ein zweiwertiges, gegebenenfalls, vorzugsweise mit Carboxylgruppen substituiertes Brückenglied, das verschieden von Q ist, bedeutet,
und
K⁺, Q, und n die oben angegebene Bedeutung haben.

Im Falle von höherfunktionalen Polyisocyanaten gilt entsprechendes auch dafür.

Besonders bevorzugt sind Carbamoylsulfonatgruppen enthaltende Verbindungen, bei denen X für den Alkoxyrest einer Hydroxycarbonsäure (Zitronensäure) steht, der durch Entfernung eines H-Atoms von der Hydroxylgruppe der Hydroxycarbonsäure resultiert.

### Komponente b)

Geeignete Verbindungen der Komponente b) sind insbesondere Mono- oder Polycarbonsäuren, vorzugsweise Hydroxypolycarbonsäuren. Beispielsweise seien genannt: Ameisensäure, Essigsäure, Oxalsäure, Glyoxylsäure, Malonsäure, Milchsäure, Weinsäure, Maleinsäure, Glutarsäure, Phthalsäure, Adipinsäure, Äpfelsäure, Bernsteinsäure, Citronensäure, oder Polycarbonsäuren wie (Co)-Polymerisate von (Meth)acrylsäure, Maleinsäure, Crotonsäure oder Itaconsäure oder deren Derivaten mit ggf. weiteren Monomeren wie Ethen, Propen, Styrol, Hydroxyethylmethacrylat, Hydroxypropylmethacrylat, Hydroxyethylacrylat, Hydroxypropyl-acrylat, 4-Hydroxybutylvinylether, insbesondere solche, die eine mittlere Molmasse (Gewichts-mittel MW) von 500 bis 100000 g/mol, insbesondere 500 bis 30000 g/mol aufweisen.

Besonders bevorzugt sind als Komponente b) wenigstens eine Carbonsäure, vorzugsweise Oxalsäure, Bernsteinsäure, Glutarsäure, oder Adipinsäure, insbesondere wenigstens eine Hydroxy-Polycarbonsäure, vorzugsweise Citronensäure, Weinsäure oder Milchsäure oder Gemische daraus.

Geeignete Komponenten b) sind auch Aminocarbonsäuren wie Glycin, Alanin, Lysin, Asparaginsäure, Glutaminsäure, Leucin, Isoleucin, Tyrosin, Prolin, Tryptophan usw. aber auch Peptide, Proteine oder Protein-Hydrolysate auf Basis von pflanzlichen und tierischen Proteinen oder kollagenhaltigen Materialien wie Soja-Protein-Hydrolysate, Hydrolysate aus Haut-, Haar-, Blössen-Abfällen, Wet-white-Abfällen, Lederabfällen, Hydrolysate keratinhaltiger Materialien, Polyasparaginsäure, Polyglutaminsäure, sowie Produkte, die durch Polykondensation von Maleinsäureamid unter Wasserabspaltung, ggf. anschliessende Derivatisierung des Polysuccinimids mit Aminoverbindungen, und anschliessende Hydrolyse der verbleibenden Succinimid-Einheiten unter Ringöffnung erhalten werden, insbesondere die Polyasparaginsäureamide aus der WO97/06279 die hiermit als inkorporiert gelten.

Weiterhin geeignet als Komponente b) sind Derivate von Cellulose, Oligosacchariden oder Monosaccariden, die eine Carboxylgruppe enthalten, beispielsweise Carboxymethylcellulose, oxidierte Stärke, vorzugsweise mit einem Molekulargewicht von weniger als 100000 g/mol, insbesondere weniger als 20000 g/mol, Gluconsäure, Glucuronsäure, oxidativ abgebaute anionische Stärke, Alginate, Pectine usw.

Bevorzugte Komponente b) ist auch ein Carbonsäuregruppen enthaltendes Umsetzungsprodukt aus einer Hydroxypolycarbonsäure und einem Polyisocyanat. Als Hydroxypolycarbonsäure kommen insbesondere die oben genannten in Frage, insbesondere Citronensäure. Als Polyisocyanate kommen insbesondere die oben genannten in Frage, insbesondere die bevorzugten Diisocyanate, allen voran Hexamethylendiisocyanat.

Eine bevorzugte Komponente b) enthält vorzugsweise 0 bis 5 Gew.-%, bevorzugt 0 bis 2 Gew.-%, bezogen auf die Zusammensetzung, eines Reaktionsproduktes aus einer Carbonsäure und dem eingesetzten Polyisocyanat.

Die erfindungsgemäße Zusammensetzung ist vorzugsweise im Wesentlichen frei von Emulgatoren, also Verbindungen, die die Grenzflächenspannung zwischen einer organischen und einer wässrigen Phase vermindern, so dass sich eine Öl-in-Wasser-Emulsion bilden kann, insbesondere ist sie Emulgator-frei.

### Komponente c)

Als bevorzugte weitere Zusatzstoffe der Komponente c) können vorzugsweise Fettungsmittel, Entstaubungsmittel, Puffer und/oder Füllstoffe enthalten sein oder nicht enthalten sein. Emulgatoren sind im Sinne dieser Erfindung bevorzugt keine Zusatzstoffe.

Fettungsmittel sind vorzugsweise Substanzen basierend auf biologischen, mineralen oder synthethischen Ölen, die zur Verbesserung der Einsetzbarkeit in Wasser mit hydrophilen Gruppen versehen werden können, z. B. durch vollständige oder partielle Sulfatierung, Sulfitierung, Carboxylierung oder Phosphatierung.

Als Füllstoffe kommen bevorzugt inerte anorganische Salze sowie organische Polymere, z. B. Sulfate wie Natriumsulfat oder Calciumsulfat, Talkum, Siliciumoxid-Verbindungen, Stärke oder Ligninsulfonate in Betracht.

Als geeignete Puffer sind solche zu verstehen, die durch Zugabe in einer ausreichenden Menge einen pH-Bereich, insbesondere einen pH-Bereich von 1 bis 5, bevorzugt 2,0 bis 3,5 einzustellen und zu stabilisieren vermögen. Als geeignete Puffer hierfür kommen bevorzugt Mischungen aus Verbindungen der Komponente c) und deren Salzen in Frage. Als bevorzugte Salze kommen insbesondere Alkalisalze, vorzugsweise Natrium- oder Kaliumsalze in Frage.

Als bevorzugte Entstaubungsmittel sind beispielsweise Alkoxylate von aromatischen Verbindungen oder Polyether oder bestimmte Diester zu nennen. Beispielsweise seien konkret genannt: Ethoxylate, Propoxylate oder Mischpolyether auf Basis von EO/PO, wobei als aromatische Verbindungen Hydrochinon oder Phenol-Styrol erwähnt seien, Polyethylenglykol mit einer mittleren Molmasse von 100 bis 800, Polypropylengykol mit einer mittleren Molmasse von 100 bis 800, EO/PO-Mischpolyether mit einer mittleren Molmasse von 100 bis 800, Monoalkylether oder Dialkylether der oben genannten Polyether, wobei der Alkylrest 1 bis 4 C-Atome aufweisen kann. Geeignet sind auch Entstaubungsmittel auf Mineralöl-Basis. Entstaubungsmittel werden vorzugsweise in einer Menge von 0 bis 5,0, bevorzugt 0,1 bis 2,0%, bezogen auf erfindungsgemäßes festes Material, eingesetzt.

Die erfindungsgemäße Zusammensetzung kann zudem weitere Zusatzstoffe enthalten oder nicht enthalten, wobei die Menge dieser Zusatzstoffe inklusive die der Komponente c) vorzugsweise bis zu 30 Gew.-% beträgt.

Bevorzugt enthält die erfindungsgemäße feste Zusammensetzung
65 bis 99,9 Gew.-%, insbesondere 78 bis 99,9 Gew.-% der Komponente a),
0,1 bis 15 Gew.-%, insbesondere 0,1 bis 10 Gew.-% der Komponente b),

0 bis 15 Gew.-%, insbesondere 0 bis 10 Gew.-% weitere von a) und b) verschiedenen Zusatzstoffen, die weniger als 0,001 Gew.-%, bezogen auf die Zusammensetzung an Emulgator enthält.

Bevorzugt enthält die feste Zusammensetzung 0 bis 5 Gew.-%, insbesondere 0 bis 2 Gew.-% Wasser (Restfeuchte).

Bevorzugt beträgt das Gewichtsverhältnis der Komponente a) zu b) 1:1 bis 10:1, insbesondere 1:1 bis 1000:1.

Bevorzugt enthält die erfindungsgemäße wässrige Zusammensetzung
10 bis 49,9 Gew.-%, insbesondere 20 bis 49,9 Gew.-% der Komponente a),
0,1 bis 8 Gew.-%, insbesondere 0,1 bis 5 Gew.-% der Komponente b),

0 bis 7 Gew.-%, insbesondere 0 bis 5 Gew.-% weitere von a) und b) verschiedenen Zusatzstoffen, die weniger als 0,001 Gew.-%, bezogen auf die Zusammensetzung an Emulgator enthält.

Bevorzugt enthält die erfindungsgemäße wässrige Zusammensetzung 35 bis 90 Gew.-%, insbesondere 50 bis 80 Gew.-% Wasser.

Die erfindungsgemäßen Zusammensetzungen können als festes, partikuläres Material oder als flüssige, insbesondere wässrige Zusammensetzung vorliegen.

Bevorzugt liegt die erfindungsgemäße Zusammensetzung als festes, partikuläres Material vor mit einem Schmelzpunkt von größer 20°C, vorzugsweise von größer 60°C, insbesondere größer 100°C.

Unter "partikulär" wird insbesondere ein Material mit einer mittleren Teilchengröße von 0,1 µm bis 1000 µm, vorzugsweise 1 bis 800 µm, insbesondere 50 bis 300 µm, wobei der Mittelwert auf die Masse (Gewichtsmittel) aller Teilchen bezogen ist. Andere Mittelwerte (Volumenmittel) können über analytische Verfahren daraus berechnet werden und umgekehrt. Die mittlere Teilchengröße kann beispielsweise mikroskopisch ermittelt werden. Bevorzugt liegt das feste Material als Pulver oder Granulat vor.

Bevorzugt weist das erfindungsgemäße, partikuläre feste Material eine Restfeuchte von 0 bis 10 Gew.-%, insbesondere 0 bis 5 Gew.-%, besonders bevorzugt 0 bis 2 Gew.-%, bezogen auf das Material auf. Das erfindungsgemäße partikuläre feste Material basiert auf einer beliebigen, vorzugsweise einer kugelförmigen oder kugelformähnlichen oder davon abgeleiteten Partikelstruktur. Es kommen auch Agglomerate von Partikeln aus den genannten Formen im Bereich der angegebenen Partikelgröße in Frage. Erfindungsgemäß kann das Material als Pulver, Granulat oder als sog. Mikrogranulat vorliegen, wie es z. B. bei der Einstoffdüsen-Sprühtrocknung erhalten wird.

Bevorzugt ist auch die erfindungsgemäße Zusammensetzung als wässrige Zusammensetzung, insbesondere wässrige Lösung, vorzugsweise mit einem Feststoffgehalt von 10 bis 49,9 Gew.-%, vorzugsweise von 20 bis 49,9 Gew.-%.

In einer ebenfalls bevorzugten Ausführungsform enthält die erfindungsgemäße Zusammensetzung, weniger als 1 Gew.-% an organischen oder anorganischen Gerbstoffen, vorzugsweise weniger als 0,1 Gew.-%, insbesondere ist die Zusammensetzung im wesentlichen frei von organischen oder anorganischen Gerbstoffen, ganz besonders bevorzugt ist sie frei von organischen oder anorganischen Gerbstoffen.

Ebenfalls bevorzugt enthält die erfindungsgemäße feste Zusammensetzung zusätzlich 0 bis 15 Gew.-%, insbesondere 0 bis 10 Gew.-%, ganz besonders bevorzugt 0,01 bis 5 % der Komponente c), jeweils bezogen auf die feste Zusammensetzung.

Ebenfalls bevorzugt enthält die erfindungsgemäße wässrige Zusammensetzung zusätzlich 0 bis 7,5 Gew.-%, insbesondere 0 bis 5 Gew.-%, ganz besonders bevorzugt 0,005 bis 2,5 % der Komponente c), jeweils bezogen auf das die wässrige Zusammensetzung. Bei der wässrigen Zusammensetzung enthält die Formulierung einen um den Wasseranteil entsprechend verminderten Prozentsatz der Komponenten a) bis c).

In einer ebenfalls besonderen Ausführungsform enthält das erfindungsgemäße Material auch Reaktionsprodukte aus Polyisocyanaten bzw. Polyisocyanat-Bisulfit-Addukten und Citronensäure. Beispielsweise sind solche Reaktionsprodukte, die Urethangruppen und Carbamoylsulfonatgruppen enthalten, durch Reaktion eines Überschusses an Polyisocyanat mit der Komponente b) und anschließende Reaktion mit einem Bisulfit und/oder Disulfit erhältlich. Verbindungen dieses Typs sind beispielsweise Bisurethane aus 1 mol Hexamethylendiisocyanat und 2 mol Citronensäure oder beispielsweise das Monourethan aus 1 mol Hexamethylendiisocyanat und 1 Mol Citronensäure, wobei verbleibende NCO-Gruppen in situ mit Bisulfit und/oder Disulfit zur Carbamoylsulfonatgruppe abreagieren.

Besonders bevorzugte Zusammensetzungen sind solche enthaltend Carbamoylsulfonatgruppenhaltigen Verbindungen, die durch Umsetzung von wenigstens einem organischen Isocyanat mit wenigstens einem Bisulfit und/oder Disulfit und wenigstens einer Hydroxy-Polycarbonsäure (Komponente b), insbesondere Citronensäure, vorzugsweise in einer Menge von 0,05 bis 3, bevorzugt 0,1 bis 2 % Gew.-%, bezogen auf die Zusammensetzung erhalten wurden.

Die bevorzugten erfindungsgemäßen Materialien enthalten weniger als 5%, besonders weniger als 1% an Harnstoffgruppen enthaltenden dimeren, trimeren oder polymeren Carbamoylsulfonaten, die durch Hydrolyse der Polyisocyanate bei der Synthese als Nebenprodukte gebildet werden können.

Bevorzugt enthält die erfindungsgemäße Zusammensetzung
- 0,1 bis 49,9 Gew.-%, insbesondere 10 bis 49,9 Gew.-% der Carbamoylsulfonatgruppenhaltigen Verbindung der Komponente a) und
- 0,1 bis 10 Gew.-%, insbesondere 0,1 bis 5 Gew.-%, ganz besonders bevorzugt 0,1 bis 3 Gew.-% der Komponente b),
   - 40,1 bis 99,8 Gew.-%, insbesondere 50 bis 89,9 Gew.-% Wasser, jeweils bezogen auf die Zusammensetzung,
   - die weniger als 0,001 Gew.-%, bezogen auf die Zusammensetzung an Emulgator enthält.

### Herstellung

Die Erfindung betrifft weiterhin ein Verfahren zur Herstellung des erfindungsgemäßen Zusammensetzung dadurch gekennzeichnet, dass man die Komponente a) mit Komponente b) ggf. mit weiteren Zusatzstoffen mischt.

Die Erfindung betrifft weiterhin ein Verfahren zur Herstellung der erfindungsgemäßen Zusammensetzung, das dadurch gekennzeichnet ist, dass man wenigstens ein organisches Polyisocyanat mit wenigstens einem Bisulfit und/oder Disulfit in Gegenwart von Wasser und unter gleichzeitiger Einwirkung von Scherkräften umsetzt, wobei die Carbonsäure der Komponente b) und ggf. weitere Zusatzstoffe vor, während oder nach der Bisulfit- und/oder Disulfit-Umsetzung zugegeben wird und die erhaltene Reaktionsmischung gegebenenfalls anschließend trocknet.

Die Erfindung betrifft weiterhin ein Verfahren zur Herstellung einer erfindungsgemäßen festen,. partikulären Zusammensetzung, das dadurch gekennzeichnet ist, dass man wenigstens ein organisches Polyisocyanat mit wenigstens einem Bisulfit und/oder Disulfit in Gegenwart von Wasser und unter gleichzeitiger Einwirkung von Scherkräften umsetzt und die erhaltene wässrige Lösung anschließend trocknet, wobei die Carbonsäure der Komponente b) vor, während oder nach der Bisulfit-Umsetzung oder erst nach der Trocknung zugegeben wird.

Weiterhin ist es vorteilhaft, die Reaktionslösung des erfindungsgemäßen Verfahrens vor der Trocknung zu filtrieren. Hierzu eignen sich z.B. bekannte Trenntechniken wie die Filtration über an sich bekannte poröse Filtermedien wie Papier, keramische Materialien oder poröse Kunststoffe. Zum Einsatz kommen dabei einfache Verfahren wie Vakuum-Filtration über Nutschen, Druckfiltration über Drucknutschen, Kammerfilterpressen, Filterbeutel, oder aufwändigere Trenntechniken unter Einsatz von Filterkartuschen, die beispielsweise auch in der HPLC-Analytik oder bei der Sterilfiltration angewendet werden. Außerdem kann eine Sedimentation mittels Zentrifugieren zur Abtrennung geringer Anteile von Trübstoffen benutzt werden.

Zur Synthese der wässrigen Zusammensetzungen und der festen Zusammensetzungen eignen sich sowohl kontinuierliche als auch diskontinuierliche Verfahrensvarianten.

Zur Erzeugung genügend hoher Scherkräfte eignen sich handelsübliche Rührer, Schnellrührrer und Dispergiermaschinen, wie Dissolver und Mischer vom Rotor-Stator-Typ, beispielsweise ein Ultraturrax-Gerät mit Schlitzscheiben, ebenso Ultraschall erzeugende Apparate, wobei die Sonotrode in das Reaktionsmedium eingetaucht wird, oder auch Hochdruckhomogenisatoren, welche beispielsweise für hohe Drücke (z.B. 10 bis 1000 bar) ausgelegt sein können, oder Strahldispergatoren unter Verwendung von Düsen, die beispielsweise in einem Druckbereich im mittleren Bereich (z. B. 10 bis 100 bar) betrieben werden.

Weiterhin ist es möglich, die Herstellung der carbamoylsulfonatgruppenhaltigen Verbindungen kontinuierlich durchzuführen, wobei die Reaktionskomponenten kontinuierlich in ein Anlagenteil eingespeist werden, das eine innige Mischung der Komponenten erlaubt, und die Reaktionsmischung bei erhöhten Temperaturen, vorzugsweise von 20 bis 100°C und bei einer an die Temperatur angepassten kurzen Verweilzeit bspw. in einem Mikroreaktor zum Endprodukt umgesetzt wird, das erhaltene Reaktionsgemisch, gegebenenfalls nach Einstellung der Temperatur, pH-Wert, Konzentration und Zugabe weiterer Komponenten in einen Trocknungsapparat eingespeist wird, und nach dem Verdampfen des Wassers das feste, partikuläre Material aus der Anlage ausgetragen wird und in entsprechenden Behältern abgefüllt wird. Als Mikroreaktionssysteme eignen sich beispielsweise solche der Firma Ehrfeld BTS GmbH oder der Firma GEA/Niro.

Es ist möglich, die Komponente b) und gegebenenfalls weitere Zusatzstoffe während der Reaktion ebenfalls kontinuierlich der Reaktion zuzuführen.

Bei kontinuierlicher Fahrweise ist es möglich, die Reaktionstemperatur bei 20 bis 100°C einzustellen. Die Verweilzeit im Reaktionssystem kann durch Erhöhung der Reaktionstemperatur bis auf einige Minuten verkürzt werden.

In einer bevorzugten Ausführungsform wird eine Lösung aus Alkali-Bisulfit- bzw. Disulfit in Wasser hergestellt. Diese wässrige Lösung und das Polyisocyanat werden nun getrennt und in der einem stöchiometrischen Verhältnis von Bisulfitgruppen (HSO₃-) zu NCO-Gruppen von 1,0 : 1,0 bis 1,2 : 1,0 , vorzugsweise 1,0 : 1,0 bis 1,05 : 1,0 entsprechenden Geschwindigkeit kontinuierlich einem Mischer zugeführt, der in eine Mikroreaktionsanlage integriert ist. Zum Beispiel können zur kontinuierlichen Herstellung Mikroreaktionsanlagen mit modularem Aufbau der Firma Ehrfeld BTS GmbH verwendet werden. Die beiden Flüssigkeitsströme werden vorzugsweise mit pulsationsfrei arbeitenden Hochdruckpumpen über Einlassmodule in die Mikroreaktionsanlage dosiert. Die dem Mischer zugeführten Flüssigkeitsströme werden durch die Mikrostruktur des Mischers innig vermischt, durch einen Wärmetauscher geleitet und anschliessend in einem Mikroreaktor bei einer Temperatur zwischen 20 und 120°C, vorzugsweise mit einer Verweilzeit von einigen Sekunden bis 15 Minuten, zur Reaktion gebracht, wobei ein vollständiger Umsatz der NCO-Gruppen erreicht wird. Nach Verlassen des Reaktors wird die wässrige Produktlösung durch einen Wärmetauscher abgekühlt und über ein Auslassmodul aus dem Mikroreaktionssystem in einen separaten Behälter gepumpt. Die Lösung kann nun in diesem Behälter ggf. mit weiteren Zusatzstoffen der Komponente b) sowie gegebenenfalls c) kontinuierlich gemischt und direkt in einen Sprühtrockner geleitet werden. Die Dosiergeschwindigkeit der Rohstoffe in die Mikroreaktionsanlage wird dabei vorteilhaft an die Geschwindigkeit des Austrags des sprühgetrockneten Materials aus dem Sprühtrockner angepasst. Für die Sprühtrockung wird die Einlasstemperatur vorzugsweise auf 120 bis 200°C, vorzugsweise auf 130°C bis 180°C eingestellt. Falls das feste Material eine Restfeuchte von mehr als 2% aufweist, kann es vorteilhaft sein, in einem nachgeschalteten, ebenfalls kontinuierlich betriebenen Trocknungsschritt zum Beispiel in einem Wirbelschicht-Trockner oder Schaufeltrockner die Restfeuchte auf einen Wert unter 2% zu senken. Das erhaltene Material wird dann kontinuierlich in entsprechende Behälter abgefüllt. Es kann vorteilhaft sein, bei dem kontinuierlichen Verfahren beispielsweise vor, während oder nach der Sprühtrocknung ein Entstaubungsmittel zuzusetzen, um ein staubfreies Produkt zu erhalten, das rieselfähig ist und vom Anwender leicht dosiert werden kann. Das erhaltene feste Material ist sehr gut löslich in Wasser (bei 20-25°C) und zeichnet sich als festes Material durch eine hervorragende Lagerstabilität auch bei hohen Temperaturen (60°C) aus.

Zur Trocknung der wässrigen Reaktionsgemische eignen sich, unabhängig davon, ob eine Zwischenisolierung der wässrigen Reaktionsmischung erfolgt oder nicht, die an sich bekannten Apparate wie Sprühtrockner, Dünnschichtverdampfer, Ausdampfschnecken, Apparate zur Kühlkristallisation oder Vakuumtrockner wie Apparate zur Gefriertrocknung oder Vakuum-trockner mit Zwangsförderung. Besonders geeignet sind Sprühtrockner, gegebenenfalls auch Sprühtrockner mit integrierter Wirbelschichttrocknung. Eine Nachtrocknung des vorgetrockneten Gutes kann erforderlich sein, so dass die maximale Restfeuchte möglichst gering gehalten wird. Die Restfeuchte liegt üblicherweise im Bereich von 0 bis 5%, bevorzugt zwischen 0 und 2%, besonders bevorzugt zwischen 0 und 1%, bezogen auf festes Material.

Als geeignetes Verfahren für die Trocknung ist insbesondere die Sprühtrocknung zu nennen, vorzugsweise Einstoffsprühtrocknung mittels Hochdruck- bzw. Drallkammerdüsen oder Sprühtrocknung mittels Zerstäubungsscheiben, Gefriertrocknung mit vor- oder nachgeschalteter Granulation oder Trockenaufarbeitung, Aufbaugranulation beispielsweise nach dem Teller- oder Trommelgranulationsverfahren gegebenenfalls mit teilweise vorgetrocknetem Produkt, Wirbelschichttrocknung und -granulation, Mischagglomeration und -trocknung gegebenenfalls in Kombination mit Wirbelschicht- bzw. Fliessbetttrocknung. Ferner kommen Verfahren wie Mischagglomeration in Suspension mit gegebenenfalls nachgeschalteter Wirbelschicht- oder Fliessbetttrocknung, Granulation mittels Pastenverformung und nachgeschalteter Nachtrocknung und Zerkleinerung oder Pelletierung sowie Dampfstrahlagglomeration in Frage. Kombinationen der genannten Verfahren sind ebenfalls möglich. Es ist auch möglich, die wässrige Lösung durch Verdampfen des Wassers durch Entspannen einer mit Kohlendioxid unter hohem Druck beaufschlagten Lösung zu trocknen, wobei ebenfalls feine Pulver erhalten werden.

Besonders bevorzugt sind die Verfahren der Sprühtrocknung mittels Hochdruck- bzw. Drallkammerdüsen, die Sprühtrocknung mit integrierter und/oder nachgeschalteter Wirbelschichtagglomeration und/oder -Trocknung, die Aufbaugranulation nach dem Tellerverfahren sowie die Wirbelschichtgranulation und -trocknung.

Die festen Carbamoylsulfonatgruppen-haltigen Verbindungen können nach verschiedenen Methoden hergestellt werden. Drei Methoden werden im Folgenden kurz beschrieben.

Ein erfindungsgemäßes Verfahren zur Herstellung der erfindungsgemäßen festen Zusammensetzung ist vorzugsweise dadurch gekennzeichnet, dass man zu der nach einem der oben beschrieben erfindungsgemäßen Verfahren erhaltenen flüssigen Reaktionsmischung ein Fällungsmittel wie Aceton, Ethanol, Isopropanol, Methylethylketon, zugibt und den ausgefallenen Niederschlag trocknet.

Zur Herstellung der festen Zusammensetzung finden sich nachfolgend drei exemplarische Verfahrensweise.

### Methode 1 = Fällung der Carbamoylsulfonatgruppen-haltigen Verbindung aus wässriger Lösung.

Die Fällung erfolgt durch Mischen der wässrigen Lösung mit einem Überschuss eines zumindest teilweise wassermischbaren Nichtlösemittels für die Komponente a), bevorzugt Ethanol, Methanol, n-Propanol, Isopropanol, Methoxypropanol, Aceton, Methylethylketon, Ethylacetat. Ganz besonders bevorzugt ist Aceton.

Die einzusetzende wässrige Lösung hat bevorzugt eine Konzentration von 10 bis 50%, besonders bevorzugt von 25 bis 45%. Besonders bevorzugt sind wässrige Lösungen, die durch Umsetzung des Polyisocyanats mit dem Alkali-Salz von Bisulfit/Disulfit hergestellt werden, wobei pro 1,00 NCO-Äquivalent vorzugsweise 1,00 bis 1,10 mol Bisulfit-Äquivalente eingesetzt werden. Besonders bevorzugt sind wässrige Lösungen, die durch Umsetzung des Polyisocyanats mit dem Alkali-Salz von Bisulfit/Disulfit hergestellt werden, wobei pro 1,00 NCO-Äquivalent vorzugsweise 1,00 bis 1,05 mol Bisulfit-Äquivalente eingesetzt werden. Ganz besonders bevorzugt sind wässrige Lösungen, die durch Umsetzung des des Polyisocyanats mit dem Alkali-Salz von Bisulfit/Disulfit hergestellt werden, wobei pro 1,00 NCO-Äquivalent vorzugsweise 1,00 bis 1,10 mol Bisulfit-Äquivalente eingesetzt werden , wobei ein Anteil der Komponente b) von wenigstens 10% bezogen auf Komponente b), bereits während der Reaktion zugesetzt wird und der Rest nach der Umsetzung.

Besonders bevorzugt werden die wässrigen Lösungen durch Umsetzung des Polyisocyanats mit dem Alkali-Salz von Bisulfit/Disulfit hergestellt, wobei pro 1,00 NCO-Äquivalent 1,00 mol Bisulfit-Äquivalente eingesetzt werden. Der letztgenannte Fall mit stöchiometrischer Äquivalenz 1:1 ist ganz besonders bevorzugt, wenn Aceton oder Methylethylketon als Fällungsmittel verwendet werden und es auf eine besondere Reinheit der Carbamoylsulfonatgruppenhaltigen Verbindung ankommt.

Das organische Lösemittel zur Ausfällung der festen Carbamoylsulfonatgruppen-haltigen Verbindung wird vorzugsweise im Überschuss eingesetzt. Das Gewichtsverhältnis Wasser zu Lösemittel beträgt 1 : 1 bis 1 : 10, besonders bevorzugt 1 : 1 bis 1 : 5. Es ist möglich, das organische Lösemittel zu der wässrigen Lösung, enthalten die Carbamoylsulfonatgruppen-haltige Verbindung, zuzugeben oder die wässrige Lösung umgekehrt zu dem vorgelegten organischen Lösmittel hinzuzugeben. In der Regel wird die Mischung während der Fällung gerührt.

Das ausgefällte Produkt wird anschließend durch Dekantieren, Zentrifugieren oder Filtration abgetrennt, vorzugsweise durch Absaugen unter Verwendung von Filtermedien, beispielsweise mit Hilfe einer Vakuumnutsche, einer Drucknutsche oder einer Kammerfilterpresse, dann gegebenenfalls mit frischem Lösemittel nachgewaschen und anschließend getrocknet. Der Trennvorgang kann auch kontinuierlich erfolgen, wenn eine Kombination mit der oben beschriebenen kontinuierlichen Herstellung der wässrigen Lösung vorgesehen ist. Die Trocknung des festen Materials erfolgt vorzugsweise im Vakuum bei einer Temperatur von -20 bis + 40°C.

Die einzusetzende wässrige Lösung hat bevorzugt eine Konzentration zwischen 10% und 60%, besonders bevorzugt von 25 bis 45%, bezogen auf die Summe von Komponente a) und b) und gegebenenfalls c).

Die einzusetzende wässrige Lösung hat vorzugsweise einen pH-Wert von 2,0 bis 6,0, besonders bevorzugt einen pH-Wert von 2,3 bis 4,0, ganz besonders bevorzugt einen pH-Wert von 2,5 bis 3,5.

Die Fällung mit organischem Lösemittel erfolgt bevorzugt unterhalb des Siedepunkts des organischen Lösemittels, besonders bevorzugt unterhalb von 50°C, ganz besonders bevorzugt im Temperaturbereich von 0°C und 40°C. Die Temperatur zu Beginn der Trocknung wird möglichst niedrig gehalten und gegen Ende der Trocknung auf die Endtemperatur erhöht. Diese schonende Verfahrensweise stellt sicher, dass eine Hydrolyse der Carbamoylsulfonatgruppen-haltigen Verbindung während der Aufarbeitung vermieden wird.

Die Ausbeute ist bei Verwendung von Aceton in den meisten Fällen nahezu quantitativ. Das Filtrat kann aber bei Bedarf anschließend nachgefällt werden. Die vereinigten Filtrate können anschließend in geeigneter Form, zum Beispiel durch eine Vakuum-Destillation, aufgearbeitet werden, um das organische Lösemittel zurückzugewinnen.

### Methode 2

Trocknung einer wässrigen Lösung, enthaltend die Carbamoylsulfonatgruppen-haltige Verbindung durch thermische Trocknungsverfahren.

Eine Trocknung der wässrigen Reaktionsgemische, die ohne den Einsatz von organischen Lösemitteln auskommt, ist besonders bevorzugt.

Die einzusetzende wässrige Lösung hat bevorzugt eine Konzentration von 10 bis 60%, besonders bevorzugt von 35 bis 50%.

Die einzusetzende wässrige Lösung hat vorzugsweise einen pH-Wert von 2,0 bis 6,0, besonders bevorzugt einen pH-Wert von 2,3 bis 4,0, ganz besonders bevorzugt einen pH-Wert von 2,5 bis 3,5.

Die dem Trockner zugeführte wässrige Lösung wird bevorzugt auf eine Temperatur unterhalb von 90°C eingestellt, ganz besonders bevorzugt ist ein Temperaturbereich von 10°C bis 80°C, insbesondere von 20 bis 60°C. Die Temperatureinstellung der dem Sprühtrockner zugeführten Lösung wird vorzugsweise kurz vor der Einlassdüse des Sprühtrockners vorgenommen. Besonders vorteilhaft ist es dabei, die Lösung zum Erwärmen durch einen separaten Wärmetauscher zu leiten, um eine kurzzeitige Erwärmung des Materials zu erreichen.

Zur Trocknung eignen sich die in der Trocknungstechnik üblichen technischen Apparate. Besonders bevorzugt sind Verfahren, bei denen Sprühtrockner eingesetzt werden. Dabei sind alle bekannten Verfahrensvarianten geeignet. So eignen sich beispielsweise Sprühtrockentürme mit Einstoffdüsen, bei denen die wässrige Lösung in den Kopf des Sprühtrockners mittels Überdruck eingedüst wird, wobei die Teilchengröße unter anderem über die verwendeten Düsendurchmesser einstellbar ist. Weiterhin geeignet sind beispielsweise Sprühtrockner mit einem Scheibenzerstäuber, bei dem die wässrige Lösung auf einen extern angetriebenen rotierenden Teller aufgebracht und durch Zentrifugalkräfte fein verteilt wird. Die Einlasstemperatur im Sprühtrockners beträgt beispielsweise 100°C bis 250°C, bevorzugt jedoch 110°C bis 200°C, besonders bevorzugt 110°C bis 180°C. Die Auslasstemperatur beträgt beispielsweise 20 bis 130°C, bevorzugt 50°C bis 110°C, besonders bevorzugt 70 bis 100°C.

Die Restfeuchte des erhaltenen Pulvers liegt vorzugsweise unter 20%, bevorzugt unter 10%, besonders bevorzugt unter 5% und ganz besonders bevorzugt unter 1,5%.

Die erhaltenen Carbamoylsulfonatgruppen-haltigen Verbindungen fallen vorzugsweise als farblose Pulver an, die nur wenig stauben. Gegebenenfalls kann es vorteilhaft sein, dass dem zu trocknenden Material vor, während oder nach der Sprühtrocknung ein Entstaubungsmittel zugesetzt wird. Dabei ist es bevorzugt, das Entstaubungsmittel der wässrigen Lösung zuzusetzen. Weiterhin ist es möglich, das Entstaubungsmittel während des Sprühtrocknungsvorgangs in den Trockner einzubringen. Weiterhin ist es möglich, das erhaltene Pulver auf deren Oberfläche mit einem Entstaubungsmittel zu belegen.

### Methode 3 = Isolierung des festen Materials durch Kryotechniken

Es ist auch möglich, die Carbamoylsulfonatgruppen-haltige Verbindung aus der wässrigen Lösung durch Kühlkristallisation auszufällen oder durch Gefriertrocknung aufzuarbeiten.

Die Aufarbeitung erfolgt dabei in bekannter Weise durch eine mechanische Abtrennung des Feststoffs beziehungsweise durch ein Verdampfen des Wasser aus der eingefrorenen wässrigen Lösung.

Ganz besonders bevorzugt zur Trocknung der wässrigen Reaktionsgemische sind die Sprühtrocknungsverfahren gemäß **Methode 2.**

### Verwendung

Die Erfindung betrifft weiterhin die Verwendung des erfindungsgemäßen Zusammensetzung als Reaktionskomponente für aminogruppenhaltige Verbindungen. Als aminogruppenhaltige Verbindungen kommen beispielsweise Polymere in Frage wie Gelatine, Aminogruppenhaltige Polysaccharide, Diamine wie Ethylendiamin, Propylendiamin, Butylendiamin, Hexamethylendiamin, Diaminocyclohexan, 1,12-Diaminododecan, aminogruppenhaltige Polyether, Polyamine wie Diethylentriamin, Triethylentetramin, Tetraethylenpentamin, Aminoethylpiperazin, Pentaethylenhexamin, Polyethylenimin, Polyvinylamin, Polyamidamin-basierte Harze, die beispielsweise in der Papierindustrie zur Erhöhung der Nassfestigkeit und als Retentionsmittel zur Anwendung kommen, Aminogruppenhaltige (Co)Polymere auf Basis von Monomeren aus der Gruppe der Diene wie Butadien, Isopren, Isobuten, Olefine wie Ethylen, Propylen, Styrol, Acrylsäureester, Methacrylsäureester, (Meth)Acrylamide, oder Vinylester wie Vinylacetat, Vinypropionat, wobei die Aminogruppen durch Verwendung aminohaltiger Comonomere oder durch nachträgliche Derivatisierung des (Co)Polymers eingeführt werden können.

Geeignete aminogruppenhaltige Verbindungen können weiterhin biologisches Material sein, wie beispielsweise Gewebe in Verbund mit anderen Materialien auch in vivo vorliegen wie Hautmaterial, Bindegewebe, Knochen, Organe, Muskelfasern oder, Wandmaterial von Blutgefässen ggf. in isolierter oder gereinigter Form.

Die verwendungsgemäß mit dem biologischen Material erhaltenen Endprodukte eignen sich vorteilhaft zur Herstellung von chirurgischen Nahtmaterialien, zur Herstellung von implantatologischen Präparaten, zur Herstellung von Knochenersatzstoffen und zur Herstellung von körperverträglichen Ersatzmaterialien für die Chirurgie. Im Falle von tierischen Häuten stellt das verwendungsgemäß erhaltenen Endprodukte dann ein gegerbtes Leder mit vorteilhaften Eigenschaften dar.

Die Erfindung betrifft daher auch Umsetzungsprodukte erhältlich durch Umsetzung von aminogruppenhaltigen Verbindungen mit den erfindungsgemäßen Zusammensetzungen.

Die Erfindung betrifft weiter die Verwendung der erfindungsgemäßen Zusammensetzung als Vernetzer für wasserlösliche Polymere auf Proteinbasis, vorzugsweise Gelatine. Eine vorteilhafte Anwendung ist die Stabilisierung von Monomer-Suspensionen in Wasser durch eine Hülle aus stabilisierendem Material, wobei das stabilisierende Material Gelatine enthält. Die Gelatine kann mit der erfindungsgemässen Zusammensetzung vernetzt werden. Dadurch wird eine Stabilisierung der Kapseln und eine Koaleszenz der Monomertropfen verhindert. In einem anschließenden Arbeitsschritt kann die Polymerisation der Monomere im Innern der Kapseln zum Beispiel durch Temperaturerhöhung initiiert werden. Vorteilhaft ist die Verwendung von öllöslichen Initiatoren, die in der Monomerphase bereits vor der Verkapselung der Monomere mit der Gelatine eingebracht werden. Das Verfahren ist besonders vorteilhaft zur Herstellung von vernetzten Styrol-Copolymerisaten und zur Herstellung von Ionenaustauschern geeignet, die eine sehr enge mittlere Teilchengrößeverteilung aufweisen müssen, wobei zur Polymerisation und zur Herstellung der von monodispersen Monomertröpfchen an sich bekannte Verfahren und Technologien angewendet werden.

Die erfindungsgemäße Zusammensetzung stellt damit eine Alternative zur bisherigen Formaldehyd-Vernetzung dar.

Die Umsetzung der erfindungsgemäßen Zusammensetzungen mit aminogruppenhaltigen Reaktionskomponenten kann in wässrigem Medium oder in Anwesenheit von organischen Lösemitteln erfolgen. Besonders bevorzugt sind Lösemittel, in denen die erfindungsgemäßen Produkte partiell löslich sind und die beispielsweise mit Wasser partiell mischbar sind. Beispielsweise seien genannt: polare Lösemittel wie Pyrrolidinon, Dimethylsulfoxid, Dimethylformamid, N-Methylpyrrolidinon, N-Ethylpyrrolidinon, Ethanol, Methanol, Ethylenglykol, Diethylenglykol, Dipropylenglykol, Methoxypropylacetat, Tetrahydrofuran.

Die Erfindung betrifft weiterhin die Verwendung der erfindungsgemäßen Zusammensetzung als Hilfsmittel für die Papierherstellung, insbesondere zur Herstellung von Nassfestmitteln oder Retentionsmitteln. Insbesondere eignen sich die erfindungsgemäßen Zusammensetzungen als Reaktionskomponente zur Herstellung von chlorfreien Nassfestmitteln durch Reaktion mit Aminogruppen enthaltenden sogenannten Polyamidamin-Harzen. Polyamidamin-Harze sind beispielsweise Polykondensate aus Adipinsäure mit einem oder mehreren Polyaminen beispielsweise aus der Gruppe Diethylentriamin, Ethylendiamin, Caprolactam, Triethylentetramin, Tetraethylenpentamin, Pentaethylenhexamin und deren Homologen oder Polyaminen mit Piperazin-Einheiten wie Aminoethylpiperazin. Die Umsetzung erfolgt vorteilhaft in wässriger Lösung in einem stöchiometrischen Verhältnis 0,1 bis 2 mol der Komponente a) bezogen auf die Amin-Äquivalente des Polyamidamin-Harzes. Wenn der gewünschte Molekulargewichtsaufbau, welcher beispielsweise durch Messung der Lösungsviskosität verfolgt werden kann, erreicht ist, kann die Kondensation durch Ansäuern des Reaktionsgemischs auf pH 2,5 bis 4 unterbrochen und das erhaltene Reaktionsprodukt stabilisiert werden. Das erhaltene Reaktionsprodukt kann dann einer hochverdünnten Celluloseanschlämmung bei der Papierherstellung in einer Dosiermenge von 0,1 bis 8 Gew.-% zugeführt werden. Nach Entwässerung des cellulosehaltigen Materials und der Blattbildung mit Hilfe einer Papiermaschine und anschließender Trocknung wird ein Papier mit einer erhöhten Reißfestigkeit im trockenen Zustand und bei Wiederbefeuchtung mit Wasser erhalten. Die erfindungsgemäße Zusammensetzung kann vorteilhafterweise zur Herstellung von Filterpapier, Fotopapier, Küchentüchern, Taschentüchern, Hygienepapieren, Banknoten, Tapeten etc. verwendet werden.

Weiterhin können die unter Verwendung der erfindungsgemäßen Zusammensetzungen erhaltenen kationischen Polyamidamin- und Polyamin-Harze, vorzugsweise hochmolekularen und stark kationischen Polyamidamin- und Polyamin-Harze als Retentionsmittel bei der Papierherstellung verwendet werden. Diese Hilfsmittel bewirken eine Beschleunigung der Entwässerung bei der Blattbildung auf einer Papiermaschine und tragen somit wesentlich zu einer Erhöhung der Laufgeschwindigkeit der Papiermaschine bei.

Dazu werden die erfindungsgemäßen Zusammensetzungen direkt der Cellulose-Slurry in situ bei der Papierherstellung als Flockungsmittel und Entwässerungsbeschleuniger zugesetzt.

Die Erfindung betrifft weiterhin die Verwendung des erfindungsgemäßen Zusammensetzung, insbesondere einer festen, partikulären Zusammensetzung beispielsweise als Vorgerbstoffe, Gerbstoffe oder auch als Nachgerbstoffe von Häuten und Fellen.

Es ist außerdem bevorzugt, die Umsetzung der erfindungsgemäßen Zusammensetzungen mit den Aminogruppenhaltigen Verbindungen in einem wässrigen System bei einem pH von 6 bis 10 durchzuführen.

Unter Vorgerbstoff wird im Rahmen dieser Erfindung ein Produkt verstanden, mit dem eine Haut oder ein Fell in einen Zustand überführt werden kann, der handelsübliche mechanische Behandlungen wie Abwelken oder Falzen ermöglicht, aber zur Fertigstellung des Leders oder Pelzes weitere Behandlungsschritte mit gerbenden Substanzen benötigt.

Die Erfindung betrifft weiterhin ein Verfahren zum Gerben von Häuten und Fellen, das dadurch gekennzeichnet ist, dass man nach Waschen, Äschern, gegebenenfalls Enthaarung und Entkälkung vorbehandelte Häute oder Felle mit der erfindungsgemäßen Zusammensetzung behandelt.

Die Erfindung betrifft ebenfalls das nach dem erfindungsgemäßen Gerbverfahren erhaltene Wet-White-Leder, worunter ein chromfrei gegerbtes Leder-Zwischenprodukt zur mechanischen Behandlung und weiteren (Nach-)Gerbung verstanden wird.

Für die Gerbung von Pelzen entfällt die Enthaarung selbstverständlich.

Die entsprechend vorbereiteten Häute (nachfolgend Blössen genannt) werden vorzugsweise in einem handelsüblichen Gerbfass in wässriger Flotte bei einer Temperatur von 10°C bis 60 °C und einem pH von 5 bis 10, bevorzugt 7 bis 9, mit 0,5 bis 10 %, bevorzugt 1 bis 4 % (bezogen auf den Anteil der reinen Komponente a)) der erfindungsgemäßen Zusammensetzung in der Art behandelt, dass man ein gegerbtes Zwischenprodukt mit einer Schrumpftemperatur von mindestens 65°C, bevorzugt mindestens 68°C, besonders bevorzugt mindestens 70°C erhält. Die Schrumpftemperatur wird nach dem Fachmann bekannten Methoden ermittelt, beispielsweise durch Erwärmen des gegerbten Zwischenproduktes durch Eintauchen in ein Wasserbad, dessen Temperatur mit einer bestimmten Heizrate erhöht wird, bis die Kontraktion des Materials beobachtet wird. Die bei Kontraktion erreichte Temperatur wird am Display des Testgeräts abgelesen (Leather Shrinkage Tester). Die Schrumpftemperatur kann auch mittels der dem Fachmann bekannten Differential Scanning Calorimetry (DSC) - Methode ermittelt werden.

Bevorzugt lässt man nach Zugabe der erfindungsgemäßen Zusammensetzung das Produkt vorzugsweise 0,1 bis 8 h, bevorzugt 0,2 bis 2 h bei einem pH im Schnitt der Blösse von 8 bis 10 und einem Flotten-pH von 7 bis 8 penetrieren und setzt dann ein Fixiermittel hinzu. Als Fixiermittel sind in der Gerberei an sich bekannte Basen oder deren Mischungen geeignet, beispielsweise Natronlauge, Alkalicarbonate, Alkalihydrogencarbonate, Magnesiumoxid, Dolomit, tertiäre Amine etc, besonders aber Dolomit, Magnesiumoxid, Natriumcarbonat und Natronlauge. Die Fixierung erfolgt dabei vorzugsweise über einen Zeitraum von 2 bis 24 h, bevorzugt 4 bis 12 h bei einem Flotten pH von 7 bis 10, bevorzugt einem Flotten-pH von 7,0 bis 8,5.

Es ist auch möglich, die Gerbung durch Ansäuern auf pH 4 bis 6 oder Zusatz von Ammoniak oder einer primären oder sekundären Aminoverbindung zu unterbrechen. Dies ist insbesondere dann vorteilhaft, wenn eine zu starke Adstringenz der Flotte vermieden werden soll und eine teilweise Inaktivierung des Gerbstoffs gewünscht ist. Diese zusätzlichen Maßnahmen sind geeignet, um den Gerbprozess in vorteilhafter Weise zu beeinflussen.

Als Aminoverbindungen eignen sich beispielsweise Ethanolamin, Diethanolamin, Propylamin, Butylamin, Hydroxypropylamin, Dihydroxypropylamin, 3-Aminopropyl-triethoxysilan, 3-Aminopropyl-trimethoxysilan, N-(2-Aminoethyl)-3-aminopropyl-triethoxysilan, N-(2-Aminoethyl)-3-aminopropyl-trimethoxysilan, Bis(3-triethoxysilylpropyl)amin, Bis(3-trimethoxysilylpropyl)amin, Hydroxyethylmorpholin, Hydroxyethyl-cyclohexylamin, Hydroxypropylmorpholin, Hydroxypropylcyclohexylamin, Hydroxyethyl-ethylendiamin, Hydroxypropyl-ethylendiamin, Bis(hydroxyethyl)-ethylendiamin, Bis(hydroxypropyl)-ethylendiamin,

Insbesondere die oben erwähnten Silane sind geeignet, um während des Gerbprozesses innerhalb des Substrates durch Hydrolyse zu Silanolgruppen und Eigenkondensation der Silanolgruppen zu Polysiloxanylgruppen zusätzlich ein dreidimensionales Sekundärnetzwerk aufzubauen und können daher in vorteilhafter Weise zu einer weiteren Stabilisierung des Hautmaterials beitragen. Dabei kann auch die Anwesenheit von mineralischen Füllstoffen die stabilisierende Wirkung verstärken. Geeignete mineralische Füllstoffe sind beispielsweise Siliciumdioxidhaltige Materialien wie hydrolytisch hergestellte oder pyrolytisch hergestellte Kieselsäuren, gemahlene Gläser, Schichtsilikate, Aluminiumsiliciate, Zirkoniumdioxid, Titandioxid. Solche mineralischen Füllstoffe können auch eine durch organofunktionelle Silane speziell behandelte und chemisch modifizierte Oberfläche aufweisen. Solche Materialien sind kommerziell verfügbar. Die Stabilisierung der Haut ist besonders bei der Verwendung als Vorgerbstoff ein erwünschter Effekt, um beispielsweise die mechanische Bearbeitung während des Falzvorgangs positiv zu beeinflussen. Auch kann dadurch die Schrumpftemperatur günstig beeinflusst werden. Diese Silane können auch in der Nachgerbung in Kombination mit der erfindungsgemäßen Zusammensetzung eingesetzt werden, um die haptischen Eigenschaften (Fülle, Weichheit) und die färberischen Eigenschaften (Egalität, Durchfärbung) zu beeinflussen.

Es ist besonders vorteilhaft, einen niedrigen Anfangs-pH der Flotte von 6 bis 7 zur Penetration des Gerbstoffs zu wählen und die Fixierung in einem pH-Bereich zwischen 7,5 und 8,5 und durch Erhöhung der Temperatur zu regulieren.

Die erhaltenen, gegerbten Zwischenprodukte eignen sich für die mechanische Weiterverarbeitung durch z. B. Abwelken, Falzen oder Spalten. Darüber hinaus zeichnen sich diese Zwischenprodukte durch eine ausgesprochen weiße, klare und lichtechte Eigenfarbe aus, was gegenüber mit Glutardialdehyd gegerbten Ledern ein deutlicher Vorteil ist. Die vorgegerbten Zwischenprodukte können mit dem Fachmann an sich bekannten Verfahren nachgegerbt und zu weichen und luftigen Crustledern fertig gestellt werden.

Die Erfindung betrifft weiterhin einen Verfahren zur Herstellung von Leder und Pelzen, dadurch gekennzeichnet, dass in wässriger Flotte bei einer Temperatur von 10 °C bis 60 °C und einem pH von 5 bis 10, bevorzugt 7 bis 9 vorbereitetes Blössenmaterial (d.h. für die Gerbung konditionierte Felle oder entkälktes und/oder gebeiztes Blössenmaterial) mit 0,5 bis 10 %, bevorzugt 1 bis 4 % (bezogen auf Wirkstoff der Komponente a)) des erfindungsgemäßen Materials solange behandelt, bis man ein gegerbtes Zwischenprodukt mit einer Schrumpftemperatur von mindestens 65°C, bevorzugt mindestens 68°C, besonders bevorzugt mindestens 70°C erhält.

Liegt die Schrumpftemperatur niedriger, ist die mechanische Bearbeitung der gegerbten Zwischenprodukte, des sog. wet white-Materials, auf z.B. Falzmaschinen problematisch, da das wet white Material zu stark an den Messerwalzen klebt und sich schlecht verarbeiten lässt. Lässt man dagegen die Gerbung länger laufen, dosiert mehr Gerbstoff oder führt eine Fixierung bei höheren pH-Werten durch, können wesentlich höhere Schrumpftemperaturen erreicht werden. Diese sind aber für die mechanische Bearbeitung der Blössen nicht erforderlich.

In einer gesonderten Ausführung der Erfindung können die Eigenschaften zur mechanischen Weiterverarbeitung sowie die endgültigen Ledereigenschaften den Anforderungen der Kunden angepasst werden, indem vor, während oder nach der Zugabe der erfindungsgemäßen Zusammensetzung weitere in der Gerberei typische Stoffe der Gerbflotte zugegeben werden.

Dazu gehören dem Fachmann an sich bekannte, handelsübliche organische organische Gerbstoffe wie Syntane, Harzgerbstoffe, vegetabile Gerbstoffe, füllende und weichmachende Polymer(nach)gerbstoffe, Fettungsmittel und Hydrophobiermittel. Vorzugsweise werden diese Mittel in den nachfolgenden Nachgerbschritten in den für wet white üblichen Mengen eingesetzt. In den Nachgerbschritten können anteilig Ligninsulfonate eingesetzt werden.

Vorteil des erfindungsgemäßen Gerbprozesses ist, dass Leder mit einem breiten Spektrum an Eigenschaften erhalten werden können und die bei der mechanischen Bearbeitung Falzspäne vielseitig als Rohstoffe verwendet werden können, u.a. auch zur Herstellung von wertvollen Produkten, die im Lederherstellungsprozess eingesetzt werden können. Dadurch wird ein wesentlicher Beitrag geliefert, die Abfälle bei der Lederherstellung weiter zu vermindern.

Ein besonderer Vorteil bei erfindungsgemäßen Zusammensetzungen ist, dass sie bei der Anwendung in wässriger Lösung nicht schäumen und unter Anwendungsbedingungen eine sehr gute Stabilität gegenüber Hydrolyse aufweisen.

### Beispiele

### Beispiel 1

### (Bisulfit : NCO = 1,05:1)

Zu einer Lösung aus 422,7 g Wasser und 609,5 g Natriumbisulfitlösung (NaHSO₃, 38-40% in Wasser) werden 182,9 g Hexamethylendiisocyanat beginnend bei 23°C in 15 Minuten zugegeben, wobei die Mischung mittels einer Dispergiermaschine mit Rotor-Stator-Prinzip (Ultraturrax-Aggregat der Firma IKA) bei 15000 bis 20000 Umdrehungen pro Minute dispergiert wird. Die Temperatur des Reaktionsgemisches wird innerhalb von 120 Minuten nach Zugabe des Isocyanats auf ca. 50°C erhöht. Der pH-Wert beträgt zu Beginn 3,04 und steigt während der Reaktion auf max. pH 5 an. Die Mischung sieht zu diesem Zeitpunkt noch milchig aus, aber das Isocyanat ist bereits in einem solchen Umfang umgesetzt, dass nach Abstellen der Dispergiermaschine und einer Wartezeit von 120 Sekunden keine organische Phase mehr beobachtet wird. Es wird anschließend noch 1 Stunde mit 20000-24000 Umdrehungen pro Minute weiter dispergiert, wobei die Temperatur bis 56°C ansteigt. Nach einer Reaktionszeit von insgesamt 3 Stunden ist eine klare Lösung entstanden. Der pH-Wert beträgt 3,66. Der Ansatz wird dann in 30 Minuten auf 25°C abgekühlt und es werden 31,1 g Citronensäure Monohydrat gelöst in 25,7 g Wasser zugegeben. Man erhält eine klare 35,0 %ige Lösung mit einem pH-Wert von 2,00.

Zu dieser Lösung werden bei Raumtemperatur 3000 ml Aceton zugegeben. Man rührt 2 Stunden nach. Der ausgefallene weiße Feststoff wird abgesaugt, mit Aceton gewaschen und im Vakuum bei 20°C bis zur Gewichtskonstanz getrocknet (Ausbeute 94,5 %, Restfeuchte unter 1 Gew.-%).
Eine Lösung von 1,75 g Pulver in 5 ml Wasser ist klar und hat einen pH-Wert von 2,20.

### Beispiel 2

### (Bisulfit : NCO = 1,05:1)

Zu einer Lösung aus 384,3 g Wasser und 554,1 g Natriumbisulfitlösung (NaHSO₃, 38-40% in Wasser) werden 166,3 g Hexamethylendiisocyanat bei 23°C in einer Portion zugegeben, wobei die Mischung mittels einer Dispergiermaschine mit Rotor-Stator-Prinzip (Ultraturrax-Aggregat der Firma IKA) bei 10000 Umdrehungen pro Minute dispergiert wird. Die Temperatur des Reaktionsgemisches wird innerhalb von 45 Minuten nach Zugabe des Isocyanats auf 63°C erhöht. Der pH-Wert beträgt zu Beginn 3,06 und steigt während der Reaktion auf pH 5,91 an. Nach einer Reaktionszeit von insgesamt 60 Minuten ist eine klare Lösung entstanden. Der Ansatz wird dann in 120 Minuten auf 30°C abgekühlt, der pH beträgt 4,18. Es werden 28,3 g Citronensäure Monohydrat gelöst in 23,4 g Wasser zugegeben. Man erhält eine klare 35,0 %ige Lösung mit einem pH-Wert von 2,10.

Zur der über ein Faltenfilter filtrierten Lösung werden bei Raumtemperatur 3000 ml Aceton zugegeben. Nach 1 Stunde wird der ausgefallene weiße Feststoff abgesaugt, mit Aceton gewaschen und im Vakuum bei 20°C bis zur Gewichtskonstanz getrocknet (Ausbeute 92,5 %, Restfeuchte 0,6 Gew.-%).
Eine Lösung von 1,75 g Pulver in 5 ml Wasser ist klar und hat einen pH-Wert von 2,10.

### Beispiel 3

### (Bisulfit : NCO = 1,05:1)

Zu einer Lösung aus 422,7 g Wasser und 609,5 g Natriumbisulfitlösung (NaHSO₃, 38-40% in Wasser) werden 182,9 g Hexamethylendiisocyanat bei 23°C in einer Portion zugegeben, wobei die Mischung mittels einer Dispergiermaschine mit Rotor-Stator-Prinzip (Ultraturrax-Aggregat der Firma IKA) bei 12000 Umdrehungen pro Minute dispergiert wird. Die Temperatur des Reaktionsgemisches wird innerhalb von 45 Minuten nach Zugabe des Isocyanats auf 56°C erhöht. Der pH-Wert beträgt zu Beginn 3,51 und steigt während der Reaktion auf pH 4,84 an. Nach einer Reaktionszeit von 60 Minuten ist die Lösung klar. Die Drehzahl wird auf 8000 Umdrehungen pro Minute reduziert und innerhalb von 2 Stunden auf 33°C abgekühlt. Die Lösung hat einen pH-Wert von 3,50.

Zu dieser Lösung werden 2600 ml Aceton zugegeben. Man rührt 2 Stunden nach. Der ausgefallene weiße Feststoff wird abgesaugt, mit Aceton gewaschen und im Vakuum bei 20°C bis zur Gewichtskonstanz getrocknet (Ausbeute 86,5 %, Restfeuchte 0,69 Gew.-%).

Der Feststoff wird nun mit 31,1 g Zitronensäure Monohydrat mit Hilfe eines Mahlwerks homogen vermischt. Eine Lösung von 1,75 g Pulver in 5 ml Wasser ist klar und hat einen pH-Wert von 2,00.

### Beispiel 4

### (Bisulfit : NCO = 1,00:1)

Zu einer Lösung aus 391,4 g Wasser und 527,6 g Natriumbisulfitlösung (NaHSO₃, 38-40% in Wasser) werden 166,3 g Hexamethylendiisocyanat bei 23°C in einer Portion zugegeben, wobei die Mischung mittels einer Dispergiermaschine mit Rotor-Stator-Prinzip (Ultraturrax-Aggregat der Firma IKA) bei 15000 Umdrehungen pro Minute dispergiert wird. Die Temperatur des Reaktionsgemisches wird innerhalb von 60 Minuten nach Zugabe des Isocyanats auf 60°C erhöht. Der pH-Wert beträgt zu Beginn 3,02 und steigt während der Reaktion auf pH 5,84 an. Nach einer Reaktionszeit von 180 Minuten ist eine trübe Lösung entstanden. Die Drehzahl wird auf 12000 Umdrehungen pro Minute reduziert und innerhalb von 2 Stunden auf 34°C abgekühlt. Der Ansatz wird filtriert. Die klare Lösung hat einen pH-Wert von 4,34. Es werden 28,3 g Citronensäure Monohydrat gelöst in 23,4 g Wasser zugegeben. Man erhält eine Lösung mit Festgehalt von 35,25 Gew.-% und einem pH-Wert von 2,12.

Zu dieser Lösung werden 3000 ml Aceton zugegeben. Man rührt 2 Stunden nach. Der ausgefallene weiße Feststoff wird abgesaugt, mit Aceton gewaschen und im Vakuum bei 20°C bis zur Gewichtskonstanz getrocknet (Ausbeute 90,3 %, Restfeuchte 0,5 Gew.-%).
Eine Lösung von 1,75 g Pulver in 5 ml Wasser ist klar und hat einen pH-Wert von 2,20.

### Beispiel 5

### (Bisulfit : NCO = 1,05:1)

Zu einer Lösung aus 431,8 g Wasser und 554,1 g Natriumbisulfitlösung (NaHSO₃, 38-40% in Wasser) werden 191,8 g Bis(isocyanatomethyl)cyclohexan (Isomerengemisch, vzw. 1,4- und 1,3-Isomer) bei 20°C in einer Portion zugegeben, wobei die Mischung mittels einer Dispergiermaschine mit Rotor-Stator-Prinzip (Ultraturrax-Aggregat der Firma IKA) bei 15000 Umdrehungen pro Minute dispergiert wird. Nach 2 Stunden wird die Einstellung des Dispergieraggregats auf 18000 Umdrehungen pro Minute erhöht. Nach weiteren 30 Minuten wird die Drehzahl auf 20000 Umdrehungen pro Minute erhöht. Die Temperatur des Reaktionsgemisches beträgt 3 Stunden nach Zugabe des Isocyanats 60°C. Nach einer Reaktionszeit von 3,5 Stunden ist die organische Phase verschwunden. Anschließend wird in 1,5 Stunden auf 40°C abgekühlt, während mit 15000 Umdrehungen pro Minute weiter dispergiert wird. Nach einer Reaktionszeit von insgesamt 5 Stunden wird filtriert und mit einer Lösung von 28,3 g Citronensäure Monohydrat in 23,4 g Wasser erhaltenen Lösung versetzt, wobei ein pH-Wert von 2,58 resultiert. Man erhält eine 35,0 %ige Lösung mit einem pH-Wert von 2,58..

Zu dieser Lösung werden bei Raumtemperatur 3000 ml Aceton zugegeben. Man rührt 2 Stunden nach. Der ausgefallene weiße Feststoff wird abgesaugt, mit Aceton gewaschen und im Vakuum bei 20°C bis zur Gewichtskonstanz getrocknet (Ausbeute 80,5 %, Restfeuchte 0,9 Gew.-%).
Eine Lösung von 1,75 g Pulver in 5 ml Wasser ist klar und hat einen pH-Wert von 2,60.

### Beispiel 6

### (Bisulfit : NCO = 1,05 : 1,0)

Es wird eine Lösung aus 326,5 g Wasser, 461,7 g Natriumbisulfitlösung (NaHSO₃, 38-40% in Wasser) und 9,8 g eines Addukts aus 2 Mol Citronensäure und 1 Mol Hexamethylendiisocyanat (erhalten durch Trocknung der wässrigen Lösung, Dispergierung bei 12000 Umdrehungen pro Minute) hergestellt. Zu dieser Vorlage werden bei 20°C 138,6 g Hexamethylendiisocyanat in einer Portion zugegeben. Die Temperatur des Reaktionsgemisches wird unter Dispergieren innerhalb von 60 Minuten auf 50°C erhöht. Nach Erreichen von 50°C werden 7,8 g Citronensäure Monohydrat, gelöst in 6,5 g Wasser zugegeben, wobei ein pH-Wert von 3,05 resultiert. Der Ansatz wird noch 1 Stunde bei 50°C gehalten und dann innerhalb von 2 Stunden auf 25°C abgekühlt. Der pH-Wert der klaren Lösung beträgt bei Raumtemperatur 2,92. Es werden 23,6 g Citronensäure Monohydrat gelöst in 19,5 g Wasser zugegeben. Nach Einstellung des Festgehalts mit 26,4 g Wasser erhält man eine klare 35,0 %-ige Lösung mit einem pH-Wert von 2,30.

Zu dieser Lösung werden bei Raumtemperatur 3000 ml Aceton zugegeben. Man rührt 2 Stunden nach. Der ausgefallene weiße Feststoff wird abgesaugt, mit Aceton gewaschen und im Vakuum bei 20°C bis zur Gewichtskonstanz getrocknet (Ausbeute 93,5 %, Restfeuchte 0,7 Gew.-%).
Eine Lösung von 1,75 g Pulver in 5 ml Wasser ist klar und hat einen pH-Wert von 2,4.

### B) Verwendungsbeispiele (Gerbungen)

Die Einsatzmengen der jeweils eingesetzten Produkte (z.B. Handelsprodukte in der Lieferform) beziehen sich auf das Gewicht der eingesetzten Rohware bzw. der Zwischenprodukte..

### B1: medizinisches Schafsfell, chromfrei

In einer betriebsüblichen Haspel werden luftgetrocknete Schafsfelle mit 201 Wasser pro Fell und 2,0 g/l eines nichtionischen Emulgators auf Basis eines Fettalkohol-ethoxylats bei 25 °C über Nacht rückgeweicht und anschließend entfleischt. Die so vorbereiteten Felle werden bei 35 °C zweimal in wässriger Flotte mit 2,0 g/l eines nichtionischen Emulgators auf Basis eines Fettalkohol-ethoxylats für jeweils 60 min. entfettet und nach Ablassen der Flotte mit warmem Wasser gründlich gespült.

Zur Vorbereitung der Gerbung wird neue Flotte vorgelegt und ohne Pickel bei 25 °C mit 5,3 g/l erfindungsgemäßem Produkt aus Beispiel 1 versetzt. Durch Zugabe von Magnesiumoxid in drei Dosen wird der pH schrittweise auf 8,8 erhöht und dann die Temperatur auf 40 °C angehoben.

Nach 12 h Laufzeit werden ins gleiche Bad 7 g/l sulfatiertes synthetisches Fettungsmittel und 2,0g/l Lecithin-basiertes Dispergierhilfsmittel gegeben. Nach 2 h wird mit Ameisensäure der pH auf 5,5 reduziert. Nach Ablassen der Flotte wird mit kaltem Wasser gründlich nachgewaschen und die Felle handelsüblich fertig gestellt und weisen eine Schrumpftemperatur von 77 °C auf.

Gegenüber handelsüblich mit Glutardialdehyd gegerbten Fellen weisen die erfindungsgemäßen Felle eine deutlich hellere Farbe sowohl des Leders wie auch der Wolle und eine bessere Lichtechtheit auf. Im Aldehyd-Test DIN 53315 A sind die Messwerte gegenüber dem Stand der Technik deutlich reduziert und liegen unter der Nachweisgrenze der Methode von 20 ppm.

Ebenfalls gute Ergebnisse wurden auch mit den Pulvern aus den Beispielen 2 bis 6 erhalten.

### B 2: Herstellung von Wet White für vollnarbiges Polsterleder

Gesalzene Rindshäute werden handelsüblich gewaschen, geäschert, enthaart, entfleischt, und gespalten. Das Blössenmaterial (2,7 mm) wird mit 200 % Wasser gewaschen und die Flotte abgelassen. Zur Entkälkung werden die Blössen in 30 % frischem Wasser mit 0,4 % Natriumbisulfit und 1,4 % eines N-freien Entkälkungsmittels (Decaltal® A-N, Produkt von BASF) 10 Minuten bewegt. Dann wird 0,15 % eines Fettalkoholethoxylat-basierten Entfettungsmittels zugegeben und für 1 h bei 25°C bewegt (pH 8,4). Dann werden 50% Wasser und 1 % eines Beizenzyms (Novobate 1547, Produkt von Novozyme) zugegeben und für 1 Stunde bewegt. Anschließend wird die Flotte abgelassen und die Blösse erneut gewaschen.

In 50 % frischer Flotte wird die Blösse 1 Stunde mit 0,25% Magnesiumoxid auf pH 9,5 konditioniert und mit 6 % des erfindungsgemäßen Produktes aus Beispiel 1 versetzt (als Pulver oder mit Wasser 1:1 verdünnt) versetzt (pH 8,3). Nach 3 Stunden wird durch Zugabe von 0,3 % Magnesiumoxid der pH der Flotte auf 9,0 bis 9,5 angehoben und die Schrumpftemperatur gemessen. Nach einer Laufzeit von 1 Stunde werden 0,2 % Magnesiumoxid und 0,1% einer wässrigen Ammoniak-Lösung (mit Wasser 1:5 verdünnt) zugegeben (nach 1 Stunde beträgt der pH 9,1) und das Fass bei 35 °C über Nacht bewegt (pH 9,2).

Zur Vorbereitung der Nachgerbung wird mit 0,6% Ameisensäure (mit Wasser 1:5 verdünnt) in 3 Portionen der pH auf 5,3 reduziert. Nach 90 Minuten wird die Flotte abgelassen. Die Wet-White-Leder (Chromfrei gegerbtes Leder-Zwischenprodukt zur mechanischen Behandlung und weiteren (Nach-)Gerbung) werden gewaschen und abgewelkt. Die Schrumpftemperatur wird erneut gemessen (77°C) und die Leder auf 1,0 mm gefalzt.

Hinsichtlich der Eigenschaften wurde ein Leder mit einer Schrumpftemperatur von 77 °C, einem glatten Narbenbild, einem trocken, festen Griff, sowie einer sehr guten Abwelkbarkeit und Falzbarkeit erhalten.

Ebenfalls gute Ergebnisse wurden auch mit den Pulvern aus den Beispielen 2 bis 6 erhalten. Die Schrumpftemperatur lag jeweils oberhalb von 70 °C, das Narbenbild war jeweils glatt, die Leder haben einen trockenen, festen Griff und ein gute bis sehr gute Abwelkbarkeit und Falzbarkeit.

### B 3: Herstellung von Wet White für ein vollnarbiges Polsterleder

Gesalzene Rindshäute werden handelsüblich gewaschen, geäschert, enthaart, entfleischt, und gespalten. Das Blössenmaterial (2,7 mm) wird mit 200 % Wasser gewaschen und die Flotte abgelassen. Zur Entkälkung werden die Blössen in 30 % frischem Wasser mit 0,4 % Natriumbisulfit und 1,4 % eines N-freien Entkälkungsmittels (Decaltal A-N, Produkt von BASF) 10 Minuten bewegt. Dann wird 0,15 % eines Fettalkoholethoxylat-basierten Entfettungsmittels zugegeben und für 1 h bei 25°C bewegt (pH 8,4). Dann werden 50 % Wasser und 1 % eines Beizenzyms (Novobate® 1547, Produkt von Novozyme) zugegeben und für 1 Stunde bewegt. Anschliessend wird die Flotte abgelassen und die Blösse erneut gewaschen.

In 50 % frischer Flotte wird die Blösse 1 Stunde mit 0,25% Magnesiumoxid auf pH 9,5 konditioniert und mit 6 % des erfindungsgemäßen Produktes aus Beispiel 1 versetzt (als Pulver oder mit Wasser 1:1 verdünnt) versetzt (pH 8,7). Nach 1 h Penetrationszeit werden 2,0 % eines 4,4'-Dihydroxydiphenylsulfon / Naphthalinsulfonsäure / Formaldehyd-Kondensats (z.B. TANIGAN® BN, Produkt von LANXESS) und 1% des Formaldehyd-Kondensats aromatischer Sulfonsäuren (z.B. TANIGAN® PR, Produkt von Lanxess) zugegeben. Nach weiteren 2 Stunden (pH 7,8) werden 0,2 % Magnesiumoxid und 0,1 % einer wässrigen Ammoniaklösung (mit Wasser 1:5 verdünnt) zugegeben (pH nach 1 Stunde 9,0) und die Schrumpftemperatur gemessen. Das Fass wird bei 35 °C über Nacht bewegt (pH 8,9).

Zur Vorbereitung der Nachgerbung wird mit 0,6% Ameisensäure (mit Wasser 1:5 verdünnt) in 3 Portionen der pH auf 5,3 reduziert. Nach 90 Minuten wird die Flotte abgelassen. Die Wet-White-Leder werden gewaschen und abgewelkt. Die Schrumpftemperatur wird erneut gemessen (76°C) und die Leder auf 1,0 mm gefalzt.

Ebenfalls gute Ergebnisse wurden auch mit den Pulvern aus den Beispielen 2 bis 6 erhalten.

### B 4: Herstellung von Wet white für ein Polsterleder:

Gesalzene Rindshäute werden handelsüblich gewaschen, geäschert, enthaart, entfleischt, und gespalten. Das Blössenmaterial (2,7 mm) wird mit 200 % Wasser gewaschen und die Flotte abgelassen. Zur Entkälkung werden die Blössen in 30 % frischem Wasser mit 0,4 % Natriumbisulfit und 1,5 % eines N-freien Entkälkungsmittels (Decaltal® A-N, Produkt von BASF) 10 Minuten bewegt. Dann wird 0,15 % eines Fettalkoholethoxylat-basierten Entfettungsmittels zugegeben und für 90 Minuten bei 25°C bewegt (pH 8,5). Dann werden 50 % Wasser und 1 % eines Beizenzyms (Novobate® 1547, Produkt von Novozyme) zugegeben und für 45 Minuten bewegt. Anschließend wird die Flotte abgelassen und die Blösse erneut gewaschen.

Die vorbereitete Blösse wird in 50 % Flotte mit 1% Natriumacetat und 1 % Natriumcarbonat auf pH 9,9 konditioniert und dann mit 6 % des erfindungsgemäßen Produktes aus Beispiel 1 (als Pulver oder mit Wassser 1:1 verdünnt) versetzt (pH 8,6). Nach 30 Minuten Penetrationszeit werden 4 % eines 4,4'-Dihydroxydiphenylsulfon /Naphthalinsulfonsäure / Formaldehyd-Kondensats (z.B. TANIGAN® BN, Produkt von LANXESS) und 2% eines Formaldehyd-Kondensats aromatischer Sulfonsäuren (z.B. TANIGAN® PR, Produkt von LANXESS) (Zugabe als 50%ige Lösungen, pH 7) zugegeben. Nach 1 Stunde (pH 8,2) wird durch Zugabe von portionsweise Zugabe von insgesamt 1 % Natriumcarbonat (mit Wasser 1:10 verdünnt) innerhalb von 2 Stunden der pH der Flotte auf 8,7 angehoben und die Schrumpftemperatur gemessen. Das Leder wird anschließend bei 30 °C über Nacht bewegt (pH 8,1).

Zur Vorbereitung der Nachgerbung wird mit 0,6 % Ameisensäure (mit Wasser verdünnt 1:10) in 3 Portionen der pH auf 7,2 reduziert, die Flotte abgelassen und die Wet-White-Leder abgewelkt. Die Schrumpftemperatur wird gemessen (70 °C) und die Leder auf 1,0 mm Stärke gefalzt.

Ebenfalls gute Ergebnisse wurden auch mit den Pulvern aus den Beispielen 2 bis 6 erhalten.

### B 5: Herstellung von Wet White für Schuhoberleder

Gesalzene Rindshäute werden handelsüblich gewaschen, geäschert, enthaart, entfleischt, und gespalten. Das Blössenmaterial (2,6 mm) wird mit 200% Flotte gewaschen und die Flotte abgelassen. Zur Entkälkung werden die Blössen im Fass in 100 % Flotte und 0,3 % Natriumbisulfit, 1,0 % eines N-freien Entkälkungsmittels (z.B. Decaltal® ES-N, Produkt von BASF) sowie 0,3 % einer Mischung von Dicarbonsäuren (z.B. Bascal® S, Produkt von BASF) für 1 Stunde bei 25°C bewegt. Bei pH 7,7 werden 1 % eines Beizenzyms (Novobate 1547, Produkt von Novozyme) und 0,1 % eines Fettalkoholethoxylat-basierten Entfettungsmittels zugegeben, für weitere 45 Minuten bewegt und die Flotte anschließend abgelassen und die Blösse zweimal gewaschen.

Die vorbereitete Blösse wird 1 Stunde mit 1 % Natriumacetat auf pH 8,0 konditioniert und mit 1,7 % des erfindungsgemäßen Produktes aus Beispiel 1 (als Pulver oder mit Wasser 1:1 verdünnt) versetzt. Nach 20 Minuten Penetrationszeit werden 0,2 % Natriumcarbonat (mit Wasser 1:10 verdünnt) zugegeben und 30 Minuten bewegt. Dann werden weitere 3,4 % des erfindungsgemäßen Produktes aus Beispiel 1 (als Pulver oder mit Wasser 1:1 verdünnt) zugegeben. Nach 1,5 Stunden wird durch portionsweise Zugabe von insgesamt 0,4 % Natriumcarbonat (mit Wasser 1:10 verdünnt) innerhalb von 2 Stunden der pH auf 8,2 angehoben und die Schrumpftemperatur gemessen. Dann wird das Fass bei 35 °C über Nacht bewegt. Dann wird mit Ameisensäure (mit Wasser 1:10 verdünnt) der pH auf 7,0 reduziert. Man bewegt das Fass für 2 Stunden. Dann wird die Flotte abgelassen. Die Wet-White-Leder werden gewaschen und abgewelkt. Die Schrumpftemperatur wird erneut gemessen (72°C). Die Leder lassen sich ohne Probleme verarbeiten und werden auf eine Stärke von 1,2 mm gefalzt.

Ebenfalls gute Ergebnisse wurden auch mit den Pulvern aus den Beispielen 2 bis 6 erhalten.

### B 6: Chromfrei gegerbte Autopolsterleder :

Die gefalzten Wet-White-Leder aus Beispiel B 4 werden mit 300 % Wasser (35°C) und 0,2 % eines Fettalkohol-Ethoxylates bei pH 7,6 20 Minuten bewegt. Nach Ablassen der Flotte werden 50 % Wasser, 3 % eines Naphthalinsulfonsäure / Formaldehyd-Kondensats (TANIGAN® RFS, Produkt von LANXESS), 1,5 % Natriumformiat und zur Vorfettung 3 % eines Lecithin-basierten Fettungsmittels (BAYKANOL® Licker SL, Produkt von Lanxess) (verdünnt mit Wasser 1:8) zugegeben. Nach einer Laufzeit von 30 Minuten werden 2% einer Polyacrylat-Dispersion (LEUKOTAN® 1084, Produkt von Dow/Lanxess) (verdünnt mit Wasser 1:3) und nach weiteren 10 Minuten 3% einer modifizierten Polyamidcarbonsäure (LEVOTAN® L, Produkt von Lanxess) (verdünnt mit Wasser 1:3) als füllende und weichmachende Nachgerbstoffe zugegeben. Nach weiteren 10 Minuten Laufzeit werden 8 % Tara und 5 % eines synthetischen Gerbstoffs basierend auf einem 4,4'-Dihydroxydiphenylsulfon / Naphthalinsulfonsäure / Formaldehyd-Kondensat (TANIGAN® BN, Produkt von LANXESS) und nach 30 Minuten (pH 5,5) noch 8 % Mimosa und weitere 5% eines synthetischen Gerbstoffs basierend auf einem 4,4'-Dihydroxydiphenylsulfon /Naphthalinsulfonsäure / Formaldehyd-Kondensat (TANIGAN® BN, Produkt von LANXESS) zugegeben. Dann wird 2 Stunden mit 3 % Farbstoff gefärbt (pH 5,5 - 5,8). Nach Aufflotten mit 50 % Wasser werden weitere 4 % eines Lecithin-basierten Fettungsmittels (BAYKANOL® Licker SL, Produkt von Lanxess) (verdünnt mit Wasser 1:8) zugegeben und bei 50°C 1 Stunde gewalkt. Dann wird durch Zugabe von 2 % Ameisensäure (verdünnt mit Wasser 1:5) in 2 Portionen 45 Minuten fixiert (pH 4) und die Flotte abgelassen. Es wird mit 200 % Wasser (50°C) gewaschen.

In frischer Flotte (100 % Wasser, 50°C) wird mit 4 % eines Lecithin-basierten Fettungsmittels (BAYKANOL® Licker SL, Produkt von Lanxess) (verdünnt mit Wasser 1:8) bei einer Laufzeit von 1 Stunde die Top-Fettung durchgeführt. Dann wird mit 1 % Ameisensäure (verdünnt mit Wasser 1:5) in 2 Schritten auf pH 3,4 angesäuert und 45 Minuten fixiert. Dann wird die Flotte abgelassen, zweimal mit 200 % Wasser gewaschen und das Leder handelsüblich durch Ausrecken, Vakuumtrocknung (50°C), Hängetrocknung, Stollen, Millen, Stollen fertig gestellt.

Man erhält sehr weiche und trotzdem festnarbige, egal gefärbte Crustleder mit einem sehr gleichmäßigen Millkorn, die sich ausgezeichnet zurichten lassen.

### B 7: Chromfrei gegerbte Schuhoberleder:

Die gefalzten Wet-White-Leder aus Beispiel B 5 werden bei 35 °C in 150 % Flotte mit 0,3% Ameisensäure (mit Wasser verdünnt 1:10) für 20 Min. gewaschen (pH 4,3) und die Flotte abgelassen.

In frischer Flotte (100 % Wasser 30°C) wird zur Vorfettung mit einer Mischung aus 2 % eines synthetischen Fettungsmittels und 1 % eines Lecithin-basierten Fettungsmittels (verdünnt mit Wasser 1:8) und 5% eines 4,4'-Dihydroxydiphenylsulfon-basierten Gerbstoffs (TANIGAN® 3LN, Produkt von Lanxess) behandelt. Nach 20 Minuten werden 10 % eines Dihydroxydiphenylsulfon /Naphthalinsulfonsäure / Formaldehyd -Kondensats (TANIGAN® CF liquid, Produkt von LANXESS) (verdünnt mit Wasser 1:1) in 2 Portionen zugegeben und 45 Minuten eingewalkt (pH 4,5). Dann werden 70 % Wasser und 2 % eines Dispergiermittels auf Basis aromatischer Sulfonsäuren (TANIGAN® PAK, Produkt von Lanxess) zugegeben. Nach einer Laufzeit von 15 Minuten werden zunächst 4% einer modifizierten Polyamidcarbonsäure (LEVOTAN LB, Produkt von Lanxess) (verdünnt mit Wasser 1:3) und 3% einer Polyacrylat-Dispersion (LEUKOTAN® 8090, Produkt von Dow/Lanxess) zugegeben. Nach weiteren 20 Minuten wird eine Mischung aus 3% eines synthetischen und 2% eines Lecithin-basierten Fettungsmittels (BAYKANOL® Licker FSU und SL, Produkte von Lanxess) (verdünnt mit Wasser 1:5) zugegeben und nach weiteren 15 Minuten eine Mischung aus 5% Mimosa und 12 % von synthetischen Gerbstoffen basierend auf 4,4'-Dihydroxydiphenylsulfon / Formaldehyd-Kondensaten (TANIGAN® VR, TANIGAN® 3LN, Produkte von LANXESS) zugegeben. Nach einer Laufzeit von 30 Minuten wird mit 12% einer Mischung aus Kastanie gesüßt und synthetischen Gerbstoffen basierend auf einem Dihydroxydiphenylsulfon / Naphthalinsulfonsäure / Formaldehyd-Kondensat (TANIGAN VR, Produkt von LANXESS) und einem Harzgerbstoff (RETINGAN® ZF Plus, Produkt von Lanxess) in Gegenwart von 1 % Farbstoff und 2% eines Färbereihilfsmittels (BAYKANOL® TF-2N, Produkt von Lanxess) ausgegerbt und gefärbt.

Am nächsten Morgen wird nach Zugabe von 100% Wasser (50 °C) mit einer Mischung aus 3 % eines Lecithin-basierten Fettungsmittels, 3% eines Lanolin-basierten Fettungsmittels (BAYKANOL® Licker LA, Produkt von Lanxess), 2 % eines synthetischen Fettungsmittels (BAYKANOL® Licker SL, FSU, Produkte von Lanxess,) sowie 1% Klauenöl (z.B. Atlas Neatsfoot® Oil 30 CT) (verdünnt mit Wasser 1:5) eine Top-Fettung durchgeführt. Nach einer Laufzeit von 60 Minuten wird mit 3 % Ameisensäure (verdünnt mit Wasser 1:10) in 3 Portionen innerhalb von 80 Minuten fixiert (pH 3,6) und die Flotte abgelassen. Die Leder werden gewaschen und handelsüblich fertig gestellt.

Man erhält sehr weiche und trotzdem festnarbige, egal gefärbte Crustleder mit einem sehr gleichmäßigen Millkorn, die sich ausgezeichnet zurichten lassen.

### C1) Herstellung eines kationischen Polykondensats auf Basis des Produkts aus Beispiel 2

216,8 g (2,105 mol) Diethylentriamin und 302 g (2,07 mol) Adipinsäure werden zusammengegeben und auf 140°C erwärmt und 1 Stunde bei dieser Temperatur gerührt. Anschließend wird die Temperatur innerhalb von 2 Stunden langsam auf 180°C erhöht. Es wird eine weitere Stunde bei dieser Temperatur gehalten, bis 75 g Wasser abdestilliert sind. Das erhaltene Polykondensat wird in 450 g Wasser aufgenommen. Man erhält eine 50 %ige Lösung mit einer Viskosität von 415 mPas (23°C) und einem Basen-Äquivalentgewicht von 398 g/mol Basen-N.

398 g der oben hergestellten 50%igen Polyamidamin-Lösung (1 mol) und 398 g Wasser werden vorgelegt. Bei 20°C werden innerhalb von 30 Minuten 0,7 mol einer 25%igen Lösung des Produkts aus Beispiel 2 in Wasser zugetropft. Man rührt bei 8 Stunden bei 20°C nach. Dann werden 4,45 g (0,11 mol) der oben beschriebenen Polyamidamin-Lösung zugegeben, wobei der pH über 7 gehalten wird. Man erwärmt auf 50 bis 55°C und hält ca. 4 Stunden bei dieser Temperatur, bis die Viskosität einer 15%igen Lösung auf 60-70 mPas bei 23°C angestiegen ist. Man verdünnt mit Wasser auf einen Festgehalt von 15% und stoppt die Reaktion durch Zugabe von 15 g einer 48%igen Schwefelsäure ab und fügt eine 50%ige Citronensäurelösung hinzu, bis ein pH-Wert von 2,7 erreicht ist. Nach Einstellung des Festgehalts mit Wasser erhält man eine 15%ige gelbliche Lösung mit einer Viskosität von 70 mPas bei 23°C.

### C2): Herstellung eines kationischen Polykondensats auf Basis des Produkts aus Beispiel 6

Analog zu Beispiel C1 wurde 1 mol der basischen Polyamidamin-Lösung vorgelegt und bei einer Konzentration von 25% mit 0,7 mol einer 25%igen wässrigen Lösung des Produkts aus Beispiel 6 umgesetzt. Nach Erreichen einer Viskosität von 60 mPas wird mit Wasser auf einen Festgehalt von 15% verdünnt und die Reaktion durch Zugabe einer 48%igen Schwefelsäure abgestoppt. Es wird noch Ameisensäure hinzugegeben, bis ein pH-Wert von 2,9 erreicht ist. Nach Einstellung des Festgehalts mit Wasser erhält man eine 15%ige gelbliche Lösung mit einer Viskosität von 58 mPas bei 23°C.

### C3): Anwendung der Produkte gemäss Beispiel C1) und C2) als Nassfestmittel für Papier

Die erhaltene kationische Polymerlösungen gemäß Beispieln C1) und C2) eignen sich zur Erhöhung der Nassfestigkeit von Papier.

Gebleichter Kiefern-/Birkensulfat-Zellstoff (Gewichtsverhältnis 80:20) wird bei einer Stoffdichte von 2,5 % im Holländer auf einen Mahlgrad von 38° Schopper-Riegler gemahlen. Von der erhaltenen Zellstoffsuspension werden 100 g in ein Becherglas gegeben und mit Wasser auf 1000 ml verdünnt. Anschließend werden die in der folgenden Tabelle angegebenen Mengen der gemäß Beispiel C1) und Beispiel C2) hergestellten Polykondensatlösungen (Gewichts-% der Anwendungsform bezogen auf Zellstoff) dem Faserstoff zugesetzt und 3 Minuten gerührt.

Danach gibt man den Inhalt der Bechergläser auf einen Blattbildner (Rapid-Köthen-Gerät), verdünnt mit 8000 ml Wasser und bildet Papierblätter mit einem Flächengewicht von ca. 80 g/m² (gemäß DIN 54358, Teil 1). Die Papierblätter werden 8 Minuten bei 85°C und 60 mbar getrocknet und im Trockenschrank noch 10 Minuten bei 110°C erhitzt.

Aus jedem Papierblatt werden nach der Klimatisierung 5 Prüfstreifen von je 1,5 cm Breite ausgeschnitten und 5 Minuten in deionisiertes Wasser getaucht. Dann werden die nassen Streifen in einer Zugprüfmaschine (DIN 53112, Teil 2) auf ihre Nassbruchlast geprüft.

Die erhaltenen Ergebnisse sind in der folgenden Tabelle zusammengestellt.

| Produkt aus Beispiel | Nassbruchlast [N] bei einer Einsatzmenge (bezogen auf Zellstoff) von | | |
|---|---|---|---|
| | 2% | 4% | 6% |
| C1 | 10,8 | 15,8 | 18,5 |
| C2 | 10,2 | 14,8 | 17,9 |

## Patentansprüche

1. Zusammensetzung, enthaltend
a) wenigstens eine Carbamoylsulfonatgruppen-haltige Verbindung und
b) wenigstens eine Carbonsäure,
die weniger als 0,001 Gew.-%, bezogen auf die Zusammensetzung an Emulgator enthält.

2. Zusammensetzung nach Anspruch 1 **dadurch gekennzeichnet, dass** als Carbamoylsulfonatgruppen-haltige Verbindungen der Komponente a) Umsetzungsprodukte aus organischen Polyisocyanaten und Bisulfit und/oder Disulfit eingesetzt werden.

3. Zusammensetzung nach wenigstens einem der Anspruch 2, **dadurch gekennzeichnet, dass** das organische Polyisocyanat ein Polyisocyanat mit einer NCO-Funktionalität von 1,8 bis 4,2 ist und vorzugsweise ein Molgewicht von < 800 g/mol besitzt, insbesondere ein Polyisocyanat mit einer NCO-Funktionalität von 1,8 bis 2,5 und einem Molgewicht < 400 g/mol ist.

4. Zusammensetzung nach wenigstens einem der Ansprüche 2 bis 3, **dadurch gekennzeichnet, dass** das organische Polyisocyanat ein Molekulargewicht von weniger als 400 g/mol und an Aliphaten oder Cycloaliphaten gebundene NCO-Gruppen aufweist, insbesondere 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan (TMHI), 1,3- und 1,4-Diisocyanatohexan, 1,3- und 1,4-diisocyanato-cyclohexan (CHDI) sowie beliebige Gemische dieser Isomeren, 1-Isocyanato-2-isocyanatomethyl-cyclopentan, 1,2-, 1,3- und 1,4-Bis(isocyanatomethyl)-cyclohexan sowie beliebige Gemische von Isomeren, 1,2-, 1,3- und 1,4- Bis(isocyanatoethyl)-cyclohexan sowie beliebige Gemische dieser Isomeren, 1,2-, 1,3-und 1,4- Bis(isocyanato-n-propyl)-cyclohexan sowie beliebige Gemische dieser Isomeren, 1-Isocyanatopropyl-4-isocyanatomethyl-cyclohexan und Isomere,1-Isocyanato-3,3,5-trimethyl-5-isocyanatomethyl-cyclohexan (IPDI), 1-Isocyanato-1-methyl-4-isocyanatomethylcyclohexan (IMCI), 2,4'- und 4,4'-Diisocyanatodicyclohexyl-methan (H₁₂MDI) und Isomere, Dimeryl-diisocyanat (DDI), Bis(isocyanatomethyl)-bicyclo[2.2.1]heptan (NBDI), Bis(isocyanatomethyl)-tricyclo[5.2.1.0^{2,6}]decan (TCDDI) und Isomere und beliebige Gemische solcher Diisocyanate und Xylylendiisocyanate der Formeln

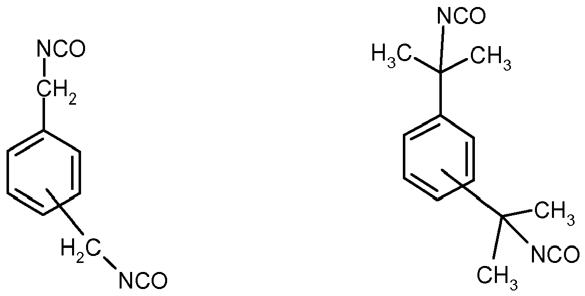

5. Zusammensetzung nach wenigstens einem der vorangegangenen Ansprüche, **dadurch gekennzeichnet, dass** als weitere Zusatzstoffe Fettungsmittel, Füllstoffe und/oder Puffersubstanzen enthalten sind oder nicht enthalten sind.

6. Zusammensetzung nach wenigstens einem der vorangegangenen Ansprüche, **dadurch gekennzeichnet, dass** sie als Komponente b) wenigstens eine Carbonsäure, vorzugsweise Oxalsäure, Bernsteinsäure, Glutarsäure oder Adipinsäure, insbesondere wenigstens eine Hydroxy-Polycarbonsäure, vorzugsweise Citronensäure, Weinsäure oder Milchsäure oder Gemische daraus, oder wenigsten ein Umsetzungsprodukt aus einer Polycarbonsäure und einem Polyisocyanates, welches Carbonsäuregruppen enthält. enthält.

7. Zusammensetzung nach wenigstens einem der vorangegangenen Ansprüche, **dadurch gekennzeichnet, dass** die Zusammensetzung eine wässrige Lösung ist.

8. Zusammensetzung nach wenigstens einem der vorangegangenen Ansprüche, **dadurch gekennzeichnet, dass** die Zusammensetzung fest und partikulär ist.

9. Verfahren zur Herstellung der Zusammensetzung nach wenigstens einem der Ansprüche 1 bis 8, das **dadurch gekennzeichnet, dass** man wenigstens ein organisches Polyisocyanat mit wenigstens einem Bisulfit und/oder Disulfit in Gegenwart von Wasser und unter gleichzeitiger Einwirkung von Scherkräften, vorzugsweise mit einem Rotor-Stator Mischer, umsetzt, wobei die Carbonsäure der Komponente b) und gegebenenfalls weitere Zusatzstoffe vor, während oder nach der Bisulfit- und/oder Disulfit-Umsetzung zugegeben wird und die erhaltene Reaktionsmischung gegebenenfalls anschließend trocknet.

10. Verfahren zur Herstellung der Zusammensetzung nach Anspruch 9, **dadurch gekennzeichnet, dass** man erhaltene flüssige Reaktionsmischung ein Fällungsmittel zugibt und den ausgefallenen Niederschlag trocknet.

11. Verwendung der Zusammensetzung nach wenigstens einem der Ansprüche 1 bis 8 als Vorgerbstoffe, Nachgerbstoffe oder Gerbstoffe zum Gerben, Vorgerben oder Nachgerben von Häuten und Fellen.

12. Verwendung der Zusammensetzung nach wenigstens einem der Ansprüche 1 bis 8 als Reaktionskomponente für aminogruppenhaltige Verbindungen.

13. Verwendung nach Anspruch 12, **dadurch gekennzeichnet, dass** die aminogruppenhaltige Verbindungen biologisches Material sind, insbesondere Gewebe in Verbund mit anderen Materialien auch in vivo vorliegend wie Hautmaterial, Bindegewebe, Knochen, Organe, Muskelfasern oder, Wandmaterial von Blutgefässen ggf. in isolierter oder gereinigter Form.

14. Verwendung der Zusammensetzung nach wenigstens einem der Ansprüche 1 bis 8 als Hilfsmittel für die Papierherstellung, insbesondere zur Herstellung von Nassfestmitteln oder Retentionsmitteln.

15. Verwendung der Zusammensetzung nach wenigstens einem der Ansprüche 1 bis 8 als Vernetzer für wasserlösliche Polymere auf Proteinbasis, insbesondere Gelatine.

16. Umsetzungsprodukte erhältlich durch Umsetzung von aminogruppenhaltigen Verbindungen mit den Zusammensetzungen, gemäß Anspruch 1.
